# EUROPÄISCHE PATENTSCHRIFT

(11) **EP 1 963 133 B1**
(45) Veröffentlichungstag und Bekanntmachung des Hinweises auf die Patenterteilung: **06.05.2009**
(21) Anmeldenummer: 06829906.4
(22) Anmeldetag: 22.12.2006
(51) Int. Cl.: B60N 2/42, B60N 2/427

(54) **INSASSENRÜCKHALTEEINRICHTUNG FÜR EIN KRAFTFAHRZEUG**
FRONT SEAT PASSENGER RESTRAINT DEVICE FOR A MOTOR VEHICLE
DISPOSITIF DE RETENUE DES PASSAGERS DANS UN VEHICULE AUTOMOBILE

(30) Priorität: 23.12.2005 DE 102005062849
(43) Veröffentlichungstag der Anmeldung: 03.09.2008
(73) Patentinhaber: Takata-Petri AG, 63743 Aschaffenburg (DE)
(72) Erfinder: BREUNINGER, Martin, 89233 Neu-Ulm (DE); KLIMA, Josef, 60300 Brno (CZ); NOZU, Hiroshi, Hikone, Shiga 529-1156 (JP)
(74) Vertreter: Baumgärtel, Gunnar
(86) Internationale Anmeldenummer: PCT/EP2006/012645
(87) Internationale Veröffentlichungsnummer: WO 2007/077035

(56) Entgegenhaltungen:
- WO-A-01/13767
- DE-C1- 10 043 290
- GB-A- 2 410 011
- JP-A- 9 039 628
- US-A- 5 944 341

## Beschreibung

Die Erfindung betrifft eine Insassenrückhalteeinrichtung für ein Kraftfahrzeug nach dem Oberbegriff des Anspruchs 1 wie aus US 5 944 341 bekannt ist.

Eine derartige Insassenrückhalteeinrichtung umfasst eine von einer Rückenlehne eines Kraftfahrzeugsitzes abragende Lehnenwange, die eine einem den Kraftfahrzeugsitz belegenden Insassen abgewandte Außenseite aufweist, sowie eine Tragstruktur eines Kraftfahrzeuges, die - bezogen auf einen in ein Kraftfahrzeug eingebauten Zustand - eine der Außenseite der Lehnenwange zugewandte Innenseite aufweist und eine dem Außenraum des Kraftfahrzeuges zugewandte Außenseite, die der Innenseite abgewandt ist. Weiterhin umfasst die bekannte Insassenrückhalteeinrichtung einen am Kraftfahrzeugsitz anzuordnenden Gassack, der zum Schutz eines Insassen vor einer vom Außenraum her auf die Außenseite der Tragstruktur erfolgenden Krafteinwirkung aufblasbar ist, wobei sich der Gassack in einem aufgeblasenen Zustand an der Innenseite der Tragstruktur abstützt und eine von der Innenseite der Tragstruktur her auf die Außenseite der Lehnenwange gerichtete Gegenkraft auf die Außenseite der Lehnenwange ausübt.

Der Erfindung liegt das Problem zugrunde, eine Insassenrückhalteeinrichtung der eingangs genannten Art bereitzustellen, bei der im Rückhaltefall die Anbindung eines den Kraftfahrzeugsitz belegenden Insassen an den Kraftfahrzeugsitz verbessert ist.

Dieses Problem wird durch eine Insassenrückhalteeinrichtung mit den Merkmalen des Anspruchs 1 gelöst. Danach ist eine Pre-Crash-Detektionsvorrichtung zum Erfassen einer bevorstehenden, vom Außenraum her auf die Außenseite der Tragstruktur erfolgenden Krafteinwirkung (z. B. Seitencrash) vorgesehen, die beim Erfassen einer bevorstehenden Krafteinwirkung, eine Ausdehnung der Lehnenwange entlang einer quer zur Rückenlehne verlaufenden Ausdehnungsrichtung aktiviert.

Hierbei kann die Lehnenwange quer zur Ausdehnungsrichtung ebenfalls ausgedehnt werden bzw. durch die Ausdehnung entlang der Ausdehnungsrichtung eine verminderte Ausdehnung entlang einer quer zur Ausdehnungsrichtung verlaufenden Richtung aufweisen.

Die verschiebliche Lehnenwange dient einerseits einer verbesserten seitlichen Abstützung des Insassen am Kraftfahrzeugsitz und somit einer erhöhten Ankopplung an den Kraftfahrzeugsitz, andererseits wirkt die ausgefahrene Lehnenwange als Kraft-Mediator und Lastverteiler zwischen dem aufgeblasenen Gassack und dem Insassen.

Der durch die Lehnenwange vorpositionierte Gassack befindet sich zum Zeitpunkt der Zündung schon annähernd in seiner Wirkposition und ermöglicht daher eine schnelle Entfaltung und eine frühzeitige Wirkung auf den Insassen. Durch den ballistischen Impuls des sich entfaltenden Gassackes (und ggf. einer Abdeckung des Gassackes) auf die Lehnenwange kann der Wirkbeginn durch den Kontakt zwischen Lehnenwange und Insasse ggf. schon vor der vollständigen Füllung des Gassackes liegen. Bevorzugt ist der Gassack benachbart zur Außenseite der Lehnenwange im Kraftfahrzeugsitz angeordnet.

Die flächige Wirkung des Gassackes über den Lastverteiler in Form der ausgedehnten Lehnenwange auf den Insassen erlaubt den Einsatz leistungsstarker Gassäcke, was sich vorteilhaft auf den effektiven Insassenschutz auswirkt.

In Abhängigkeit von der Pre-Crash-Detektionsvorrichtung kann die Zündung des Gassackes ggf. so frühzeitig stattfinden, dass der Gassack bereits vor dem Beginn der Intrusion über die Lehnenwange auf den Insassen wirkt und somit den Raum zwischen Insassen und Tragstruktur aktiv vergrößert. Dabei wird der Insasse durch den Gassack mit der sich deformierenden Rückenlehne (Lehnenwange) von der Tragstruktur (z.B.Türstruktur) weg geschoben. Hierdurch wird der wirksame Absorptionsweg vergrößert und die relative Geschwindigkeit, mit der der Insasse ggf. von der intrudierenden Tragstruktur getroffen wird, vermindert.

Vorzugsweise erfolgt eine Zündung des Gassackes jedoch mittels eines Crashsensors, der dazu ausgebildet ist, einen sich tatsächlich ereignenden Crash zu sensieren. Beispielsweise durch Erfassung einer Verzögerung oder Deformation des Kraftfahrzeuges durch ein Kollisionsobjekt.

Ein weiterer Vorteil der ausdehnbaren Lehnenwange ist deren Fähigkeit, sich den zu ihrer Positionierung nötigen Platz durch ein wegschieben von weichen Strukturen und Insassenkörperteilen selbst zu schaffen. Damit wird ein ausreichend großer Entfaltungsraum für das an die Lehnenwange gekoppelte Airbagmodul (Gassack) sichergestellt.

In einem Ausführungsbeispiel der Erfindung weist die Lehnenwange einen entlang der Ausdehnungsrichtung zwischen einer Ruheposition und einer Betriebsposition hin und her bewegbaren Lehnenwangenkörper auf. Dieser kann von einer äußeren Umhüllung der Lehnenwange (Schaum, ggf. mit Bezug) umhüllt sein. Der Lehnenkörper ist dabei dazu eingerichtet und vorgesehen, aus einer Ruheposition in eine Betriebsposition bewegt zu werden, um die Lehnenwange in ihren ausgedehnten Zustand zu überführen.
Alternativ oder ergänzend hierzu kann zumindest ein (ggf. reversibel) aufblasbare Körper in der Lehnenwange vorgesehen sein, so dass der ausgedehnte Zustand der Lehnenwange durch Aufblasen des mindestens eine Aufblaskörpers hergestellt bzw. eingestellt werden kann.

Bevorzugt weist die Rückenlehne des Kraftfahrzeugsitzes einen Lehnenrahmen als einen Grundkörper der Rückenlehne auf, an dem der Lehnenwangenkörper zum Bewegen aus der Ruheposition in die Betriebsposition vorzugsweise beweglich gelagert ist.

In einer Variante der Erfindung ist der Lehnenwangenkörper dabei über einen ersten und einen zweiten Hebel beweglich am Lehnrahmen gelagert, wobei die beiden Hebel jeweils über eines ihrer Enden am Lehnenwangenkörper schwenkbar gelagert sind, und wobei die beiden Hebel über das jeweilige andere Ende schwenkbar am Lehnenrahmen gelagert sind.

Bevorzugt sind die beiden Hebel über jeweils einen mittleren, die beiden Enden miteinander einstückig verbindenden Abschnitt gegeneinander verschwenkbar aneinander festgelegt. Alternativ hierzu sind die beiden Hebel bevorzugt jeweils um eine entlang der Lehnenwange verlaufende Achse schwenkbar am Lehnenrahmen gelagert, so dass die Lehnenwange beim Ausdehnen entlang der Ausdehnungsrichtung, d.h., beim Bewegen des Lehnenwangenkörpers aus der Ruheposition in die Betriebsposition, auf einen den Kraftfahrzeugsitz bestimmungsgemäß belegenden Insassen zu bewegt wird.

Zum Erzeugen der Bewegung des Lehnenwangenkörpers ist eine mit der Pre-Crash-Detektionsvorrichtung zusammenwirkende Bewegungserzeugungsvorrichtung vorgesehen, die dazu eingerichtet und vorgesehen ist, beim Erkennen einer bevorstehenden Krafteinwirkung auf die Außenseite der Tragstruktur zumindest einen der beiden Hebel, insbesondere beide Hebel, zu verschwenken, um den Lehnenwangenkörper aus der Ruheposition in die Betriebsposition zu verlagern.

Alternativ zu einer linear beweglichen Lagerung mittels verschwenkbaren Hebeln ist zur linear verschieblichen Lagerung des Lehnenwangenkörpers am Lehnenrahmen ein Führungsmittel vorgesehen, dass zumindest ein am Lehnenrahmen ausgebildetes, entlang der Ausdehnungsrichtung erstrecktes Langloch aufweist sowie lehnenwangenkörperseitig einen Stift, der mit dem Langloch in Eingriff steht, so dass der Stift und damit der Lehnenwangenkörper entlang der Ausdehnungsrichtung am Lehnenrahmen aus der Ruheposition in die Betriebsposition verschiebbar sind, wobei den beiden Positionen jeweils ein Anschlag des mindestens einen Langloches zugeordnet ist. Vorzugsweise sind zwei derartige, parallel zu einander am Lehnenrahmen ausgebildete Langlöcher vorgesehen. Vom Lehnenwangenkörper ragen dann dementsprechend zwei Stifte ab, die mit je einem Langloch in gleitendem Eingriff stehen.

In einer Variante der Erfindung ist ein Modulträger zum Tragen eines Gassackpaketes vorgesehen, das zumindest den Gassack und ggf. einen Gasgenerator zum Aufblasen des Gassackes umfasst, wobei der Modulträger bevorzugt flächig ausgebildet ist und einen entlang der Lehnenwange erstreckten Randbereich mit einer entlang der Lehnenwange erstreckten konkaven Wölbung aufweist, die eine Aufnahme für das Gassackpaket bildet.

Vorzugsweise ist der Modulträger als ein das Gassackpaket umgebendes, starres Gehäuse ausgeformt, das dazu ausgebildet ist, aus einer ersten Position in eine ausgefahrene zweite Position entlang einer von der Außenseite der Lehnenwange zur Innenseite der Tragstruktur gerichteten Bewegungsrichtung verlagert zu werden, wenn die Pre-Crash-Detektionsvorrichtung eine bevorstehende Krafteinwirkung auf die Außenseite der Tragstruktur erkennt.

Das Gehäuse verfügt über zumindest einen öffenbaren Bereich, durch den hindurch der Gassack (bei geöffneten öffenbaren Bereich) in einen Innenraum des Kraftfahrzeuges entfaltbar ist, wobei der öffenbare Bereich bei der Verlagerung des Modulträgers aus der ersten Position in die zweite Position bevorzugt zwischen der Innenseite der Tragstruktur und der Außenseite der Lehnenwange positioniert wird, so dass sich der Gassack entlang der Ausdehnungsrichtung zwischen der Innenseite der Tragstruktur und der Außenseite der Lehnenwange frei (ungehindert) entfalten kann.

Zum Bewegen des Modulträgers (Gehäuses) ist eine mit der Pre-Crash-Detektionsvorrichtung zusammenwirkende Bewegungserzeugungsvorrichtung vorgesehen, die dazu eingerichtet und vorgesehen ist, den Modulträger aus der ersten Position in die zweite Position zu bewegen, wenn die Pre-Crash-Detektionsvorrichtung eine bevorstehende Krafteinwirkung auf die Außenseite der Tragstruktur erfasst. Die Bewegungserzeugungsvorrichtung kann den Modulträger elektromotorisch, pneumatisch oder pyrotechnisch bewegen.

In einem weiteren Ausführungsbeispiel der Erfindung umfasst der Lehnenwangenkörper ein energieabsorbierendes Polster bzw. ist als ein solches ausgebildet.

Bevorzugt ist dieses Polster in der Betriebsposition des Lehnenwangenkörper quer zur Ausdehnungsrichtung zwischen der Innenseite der Tragstruktur und dem Becken eines den Kraftfahrzeugsitz bestimmungsgemäß belegenden Fahrzeuginsassen angeordnet.

Eine Variante der Erfindung sieht vor, dass das Polster zumindest über einen entlang einer Erstreckungsrichtung längs erstreckten ersten Arm aus der Ruheposition in die Betriebsposition schwenkbar am Kraftfahrzeugsitz gelagert ist. Hierbei ist der erste Arm bevorzugt über einen Verbindungsbereich mittig an einer der Tragstruktur zugewandten Außenseite des Polsters starr festgelegt oder beweglich, insbesondere drehbar, an dieser gelagert. Der Verbindungsbereich ist über einen mittleren Abschnitt des ersten Armes mit einem Lagerbereich des ersten Armes verbunden, über den der erste Arm an einem mit der Rückenlehne verbundenen Sitzteil des Kraftfahrzeugsitzes um eine Drehachse schwenkbar gelagert ist, die - bezogen auf einen in ein Kraftfahrzeug eingebauten Zustand des Kraftfahrzeugsitzes - vorzugsweise parallel zur Fahrzeugquerachse ausgerichtet ist.

Vom Verbindungsbereich steht entlang der Erstreckungsrichtung des ersten Armes ein freier erster Endabschnitt des ersten Armes ab, der über eine flexible, längs erstreckte Lehnenwangenstütze, die zusammen mit dem Polster ein Gerüst für die Lehnenwange bildet, mit der Rückenlehne (Lehnenrahmen) verbunden ist, wobei die Lehnenwangenstütze quer zu ihrer Längserstreckung entlang der Ausdehnungsrichtung verlagert wird, wenn das Polster aus der Ruheposition in die Betriebsposition bewegt wird, d.h., das Polster nimmt bei seiner Bewegung die Lehnenwangenstütze mit.

Zum Verschwenken des ersten Armes um dessen Drehachse derart, dass der Lehnenkörper aus der Ruheposition in die Betriebsposition bewegt wird, steht vom Lagerbereich entlang der Erstreckungsrichtung ein freier, zweiter Endabschnitt des ersten Armes ab, der eine Verzahnung aufweist, die zum vorgenannten Zweck mit einem Antriebsrad in Eingriff steht, das mittels einer mit der Pre-Crash-Detektionsvorrichtung zusammenwirkenden Bewegungserzeugungsvorrichtung angetrieben wird, die dazu eingerichtet und vorgesehen ist, beim Erkennen einer bevorstehenden Krafteinwirkung auf die Außenseite der Tragstruktur, das Antriebsrad zum Bewegen des Polsters aus der Ruheposition in die Betriebsposition anzutreiben.

Alternativ zu der Verzahnung kann ein längs erstrecktes Koppelement am zweiten Endabschnitt des ersten Armes angreifen, dass eine lineare Bewegung einer Bewegungserzeugungsvorrichtung auf den ersten Arm überträgt, um diesen zu verschwenken.

Zum Unterstützen der Bewegung des Polster aus der Ruheposition in die Betriebsposition ist bevorzugt ein zweiter Arm vorgesehen, der über ein erstes freies Ende am Polster und über ein dem ersten Ende gegenüberliegendes zweites freies Ende an der Rückenlehne gelagert ist.

In einer Variante dient das Polster als ein Träger des Gasgenerators, mit dem das zum Aufblasen des Gassackes benötigte Gas erzeugbar ist. Hierbei umhüllt das Polster bevorzugt den Gasgenerator und schützt somit einerseits den Gasgenerator vor Beschädigungen und andererseits den zu schützenden Insassen vor dem Gasgenerator.

In einem Ausführungsbeispiel der Erfindung ist das Gassackpaket an der Lehnenwangenstütze befestigt, die in diesem Fall die Funktion des Modulträgers übernimmt.

Bevorzugt ragt der Gassack im aufgeblasenen Zustand entlang der Ausdehnungsrichtung über die Lehnenwange hinaus, wobei sich der Gassack Im aufgeblasenen Zustand vor einem vorderen Rand der Lehnenwange zur Fahrzeugmitte hin ausbaucht, was zur Verbesserung der Insassenrückhaltung beiträgt, insbesondere bei Seitenkollisionen mit vergleichsweise großer Frontalkomponente.

In einer Variante der Erfindung weist der Gassack eine erste Kammer und eine die erste Kammer umgebende zweite Kammer auf, wobei die erste Kammer zumindest eine Durchströmöffnung aufweist, durch die hindurch in die erste Kammer eingeleitetes Gas in die zweite Kammer strömen kann, und wobei der Gassack dazu ausgebildet ist, über die erste Kammer mit Gas befüllt zu werden.

Bei entsprechender Auslegung des Überström-Querschnitts (Durchströmöffnung) baut sich schon vor dem Befüllen der äußeren zweiten Kammer ein hoher Druck in der inneren ersten Kammer auf, so dass der Gassack relativ früh über die Lehnenwange auf den Insassen einwirken kann. Nimmt die Gasförderung des Gasgenerators ab und versiegt, so gleichen sich die Drücke in der ersten und der zweiten Kammer des Gassack aneinander an und lediglich die äußere, zweite Kammer wirkt flächig über die Lehnenwange auf den Insassen ein.

In einer weiteren Ausführungsform der Erfindung ist der Kraftfahrzeugsitz parallel zur Fahrzeugquerachse zum Innenraum hin verschiebbar oder um eine parallel zur Fahrzeuglängsachse verlaufende Fahrzeugachse rotierbar. Die Auslösung einer entsprechenden Bewegungserzeugungsvorrichtung erfolgt über die Pre-Crash-Detektionsvorrichtung. Durch die Kraftfahrzeugsitzverschiebung bzw. Rotation wird ein zusätzlicher Absorptionsweg zwischen einem den Kraftfahrzeugsitz belegenden Insassen und der Tragstruktur geschaffen und ermöglicht über einen entsprechend angepassten Gassack einen effektiven Insassenschutz. Der Kraftfahrzeugsitz kann dabei auch passiv sein, d.h., die Verschiebung des Sitzes erfolgt durch die vom Gassack auf den Sitz ausgeübte Gegenkraft.

Ein derartiger zusätzlicher Absorptionsweg bzw. die Aufrechterhaltung eines Entfaltungsraumes für den Gassack zwischen der Tragstruktur und dem Kraftfahrzeugsitz wird in einer alternativen Ausführungsvariante der Erfindung vorzugsweise durch einen entlang der Fahrzeugquerachse deformierbaren Kraftfahrzeugsitz gewährleistet, d.h., der Kraftfahrzeugsitz, insbesondere die Rückenlehne bzw. deren Lehnenwange, ist dazu ausgebildet, sich entlang der Fahrzeugquerachse kontrolliert zu deformieren, wenn der sich aufblasende Gassack sich an der Tragstruktur abstützt und eine entsprechende, zum Innenraum des Kraftfahrzeuges hin gerichtete Gegenkraft in den Kraftfahrzeugsitz einleitet.

Bevorzugt ist ein mit dem Gasgenerator zusammenwirkenden Crashsensor vorgesehen, der beim Erfassen einer auf die Außenseite der Tragstruktur erfolgenden Krafteinwirkung den Gasgenerator zum Aufblasen des Gassackes aktiviert. Bei dem Crashsensor handelt es sich vorzugsweise um eine Detektionsvorrichtung, die eine sich tatsächlich ereignende Krafteinwirkung detektiert. Ggf. kann es sich bei dem Crashsensor um die besagte Pre-Crash-Detektionsvorrichtung handeln. Die Aktivierung des Gasgenerators durch den Crashsensor erfolgt vorzugsweise nach der Zustellung (Ausdehnung) der Lehnenwange bzw. dem Ausfahren eines entlang der Fahrzeugquerachse ausfahrbaren Gehäuses des Gassackes.

Bei der Tragstruktur handelt es sich vorliegend um ein Teil oder Bereich einer seitlichen Kraftfahrzeugkarosserie, insbesondere um eine Kraftfahrzeugtür oder eine Kraftfahrzeugsäule (z.B. B-Säule). Bei dem Kraftfahrzeugsitz handelt es sich vorzugsweise um einen Fahrersitz oder einen Beifahrersitz.

Weitere Merkmale und Vorteile der Erfindung werden bei der nachfolgenden Beschreibung von Ausführungsbeispielen anhand der Figuren deutlich werden.

Es zeigen:

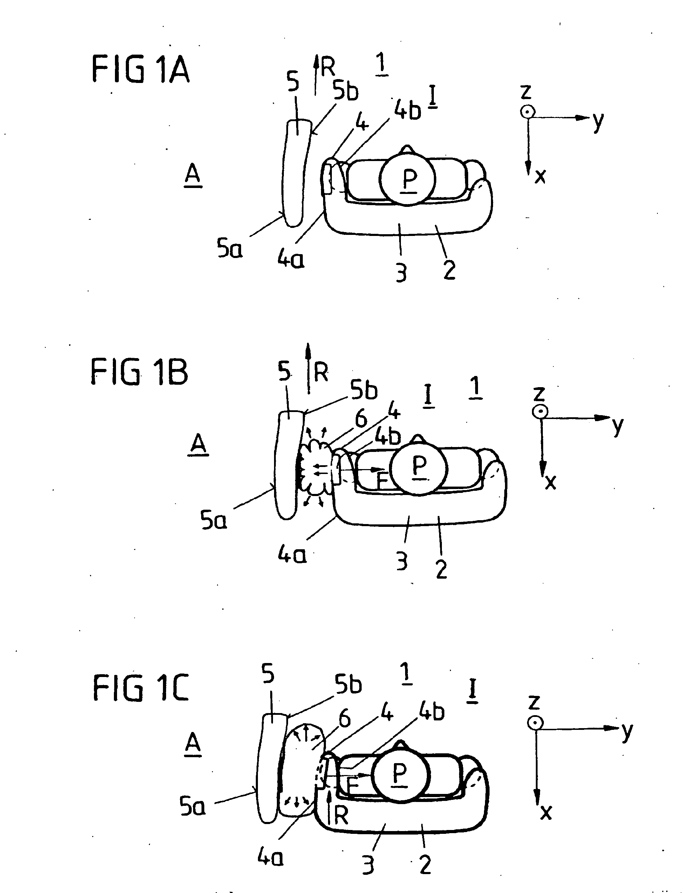

- Fig. 1A-C:: eine schematische Draufsicht auf eine Insassenrückhalteeinrichtung, mit einer ausstellbaren Lehnenwange und einem in der Lehnenwange angeordneten Gassack, und zwar zu drei unterschiedlichen Zeitpunkten nach einer Aktivierung der Lehnenwange;

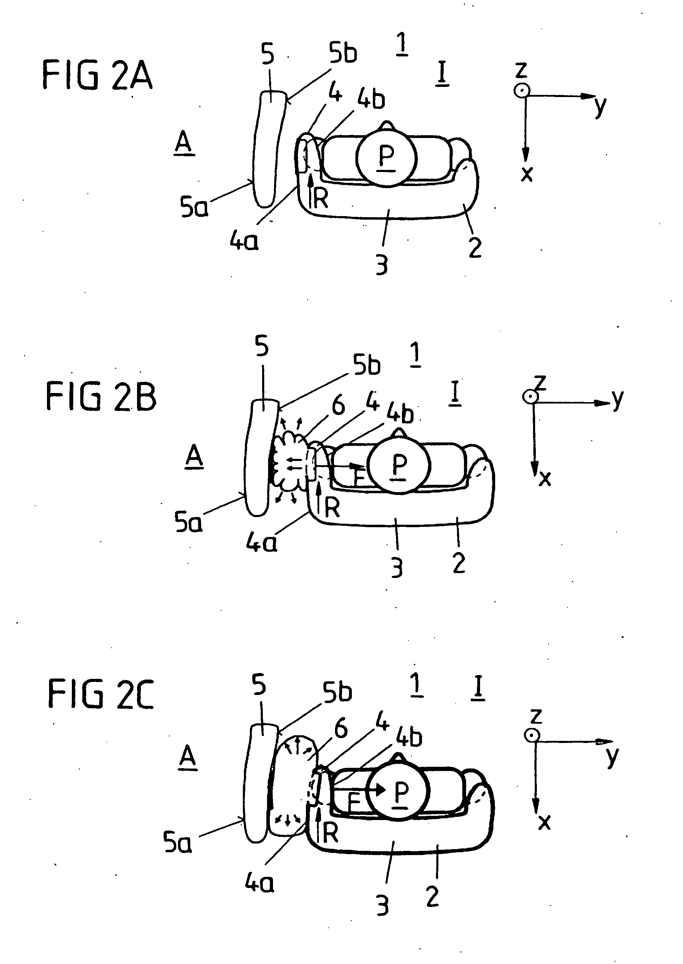

- Fig. 2A-C:: eine schematische Draufsicht auf eine Insassenrückhalteeinrichtung, mit einer ausstellbaren Lehnenwange und einem in der Lehnenwange angeordneten Gassack, zu drei unterschiedlichen Zeitpunkten nach einer Aktivierung der Lehnenwange, wobei der Gassack deutlich vor der Intrusion der Seitenstruktur (Tragstruktur) gezündet wurde;

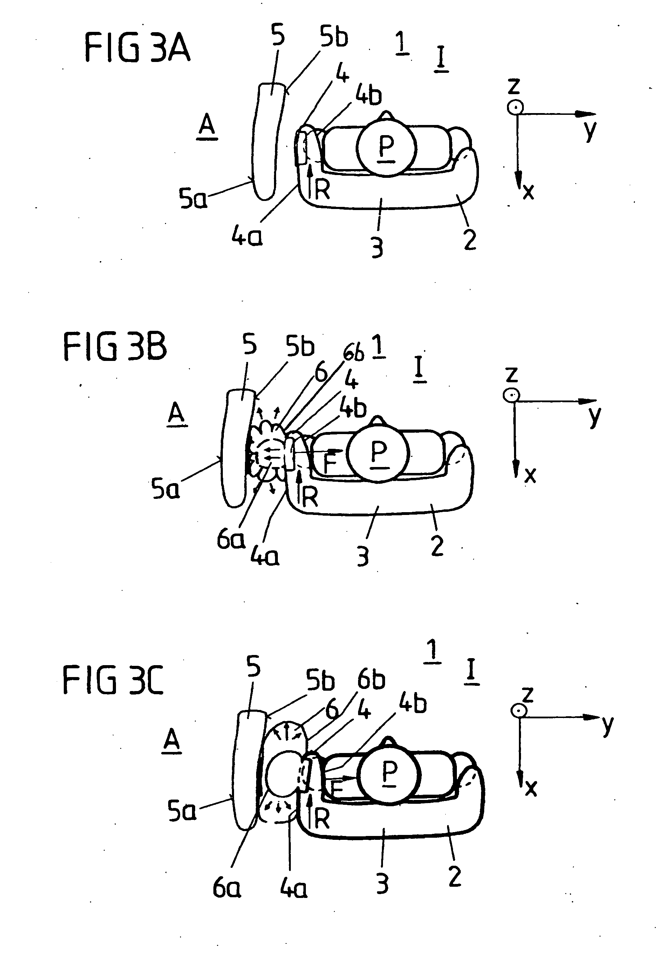

- Fig. 3A-C:: eine schematische Draufsicht auf eine Insassenrückhalteeinrichtung, mit einer ausstellbaren Lehnenwange und einem in der Lehnenwange angeordneten Gassack, zu drei unterschiedlichen Zeitpunkten nach einer Aktivierung der Lehnenwange, wobei der Gassack zwei Kammern aufweist, um eine besonders schnelle Positionierung des Gassackes zu bewirken.

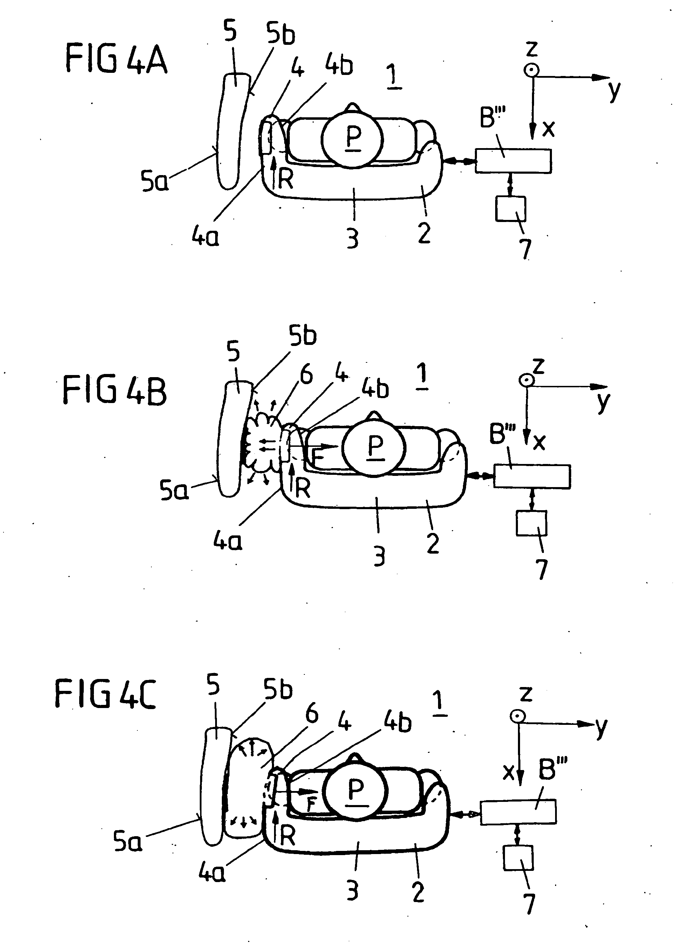

- Fig. 4A-C:: eine schematische Draufsicht auf eine Insassenrückhalteeinrichtung, mit einer ausstellbaren Lehnenwange und einem in der Lehnenwange angeordneten Gassack, zu drei unterschiedlichen Zeitpunkten nach einer Aktivierung der Lehnenwange, wobei der Kraftfahrzeugsitz mittels einer Bewegungserzeugungsvorrichtung zusätzlich von der Tragstruktur weg bewegbar ist;

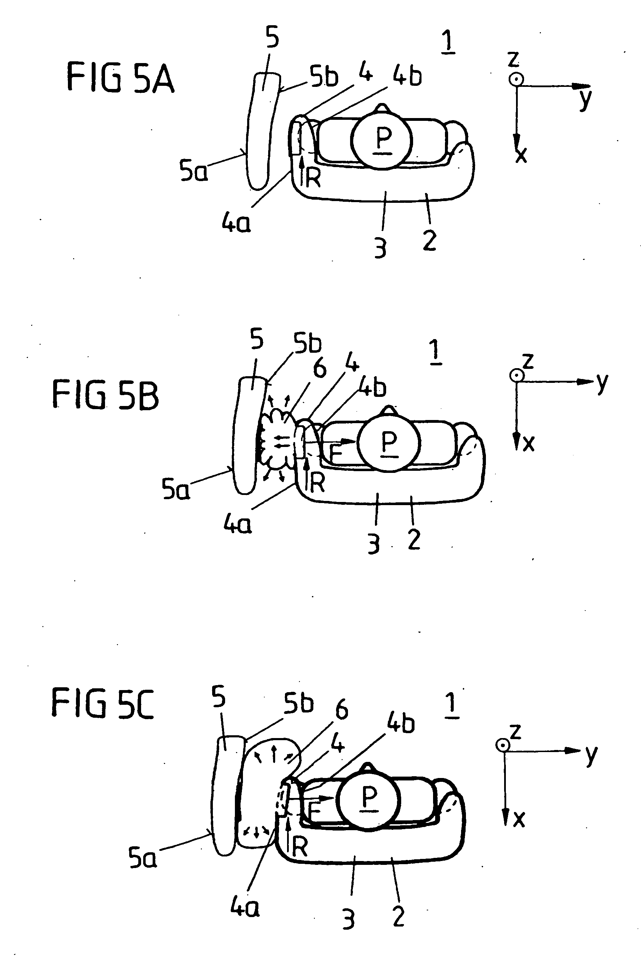

- Fig. 5A-C:: eine schematische Draufsicht auf eine Insassenrückhalteeinrichtung, mit einer ausstellbaren Lehnenwange und einem in der Lehnenwange angeordneten Gassack, zu drei unterschiedlichen Zeitpunkten nach einer Aktivierung der Lehnenwange, wobei der Gassack vor dem Insassen ausbaucht, um dessen Schutzwirkung bei Unfällen mit großer Frontalkomponente zu erhöhen;

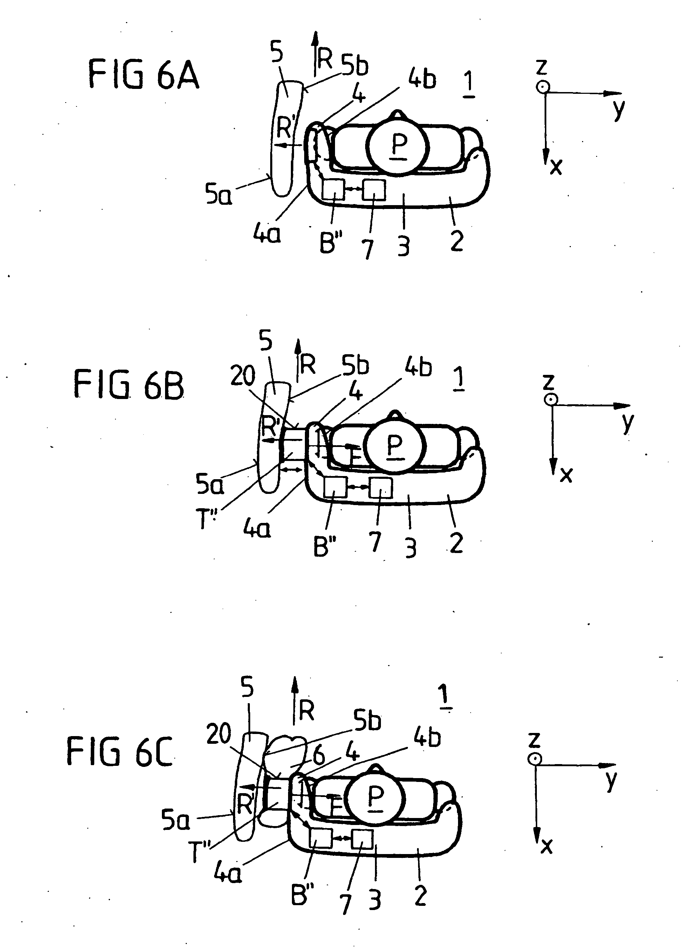

- Fig. 6A-C:: eine schematische Draufsicht auf eine Insassenrückhalteeinrichtung, mit einer ausstellbaren Lehnenwange und einem in der Lehnenwange angeordneten Gassack, zu drei unterschiedlichen Zeitpunkten nach einer Aktivierung der Lehnenwange, wobei der Gassack in einem Gehäuse angeordnet ist, das aus der Lehnenwange ausfahrbar ist;

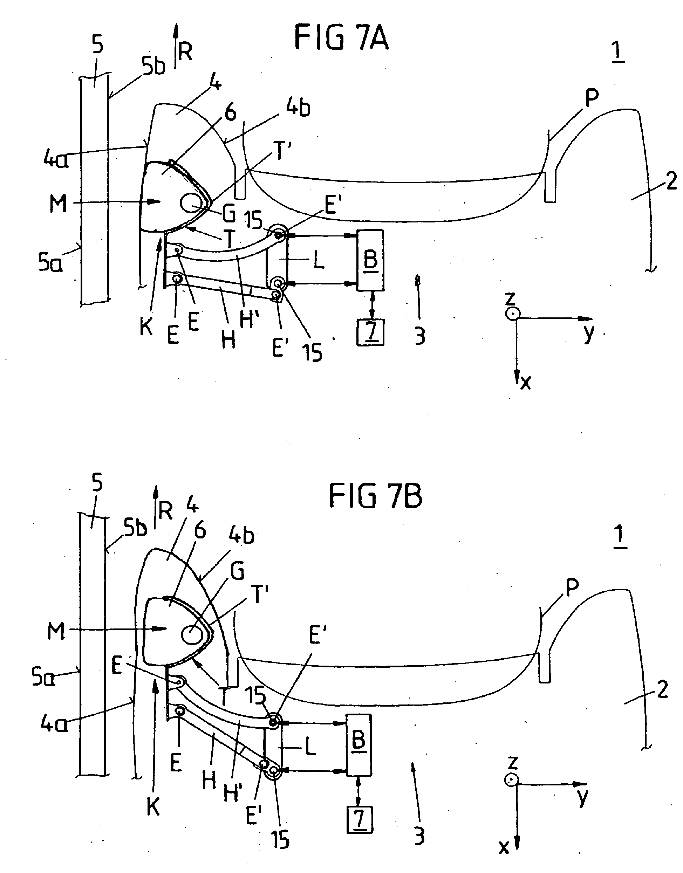

- Fig. 7A-7B:: eine schematische Draufsicht auf eine Insassenrückhalteeinrichtung, mit einer ausstellbaren Lehnenwange und einem Lehnenwangenkörper, der Lehenwange, der schwenkbar an einem Lehnenrahmen gelagert ist, um die Lehnenwange aus einer Ruheposition (Fig. 7A) in eine Betriebsposition (Fig. 7B) auszudehnen.

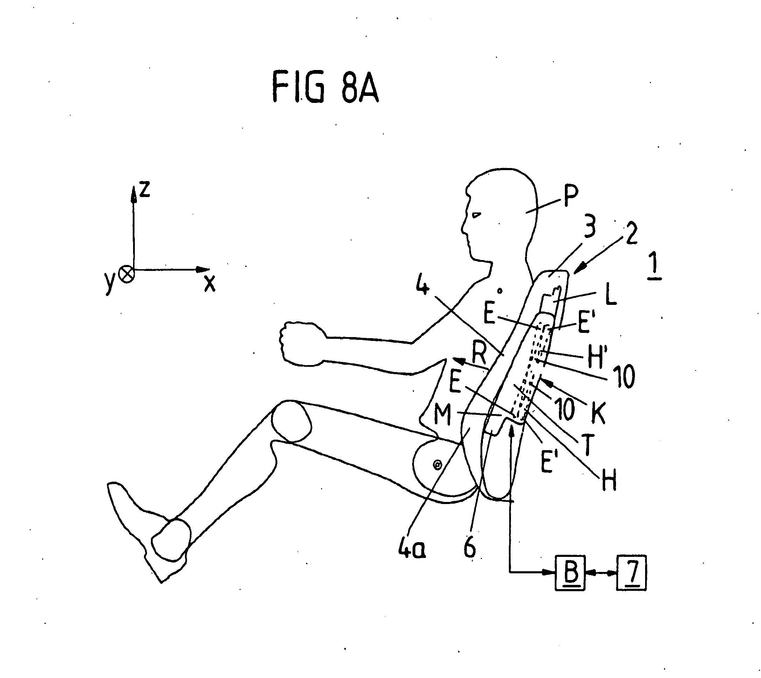

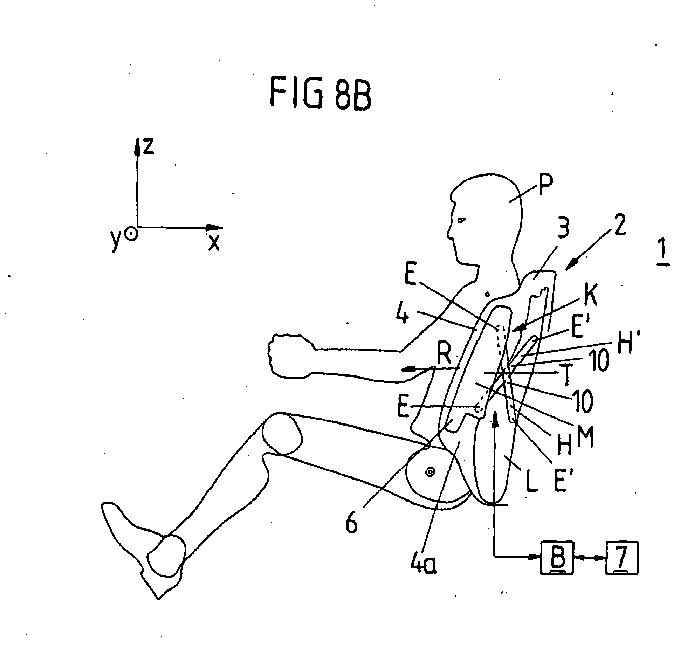

- Fig. 8A-8B:: eine schematische Seitenansicht einer Insassenrückhalteeinrichtung, mit einer ausstellbaren Lehnenwange und einem Lehnenwangenkörper, der Lehenwange, der linear verschieblich an einem Lehnenrahmen gelagert ist, um die Lehnenwange aus einer Ruheposition (Fig. 8A) in eine Betriebsposition (Fig. 8B) auszudehnen;

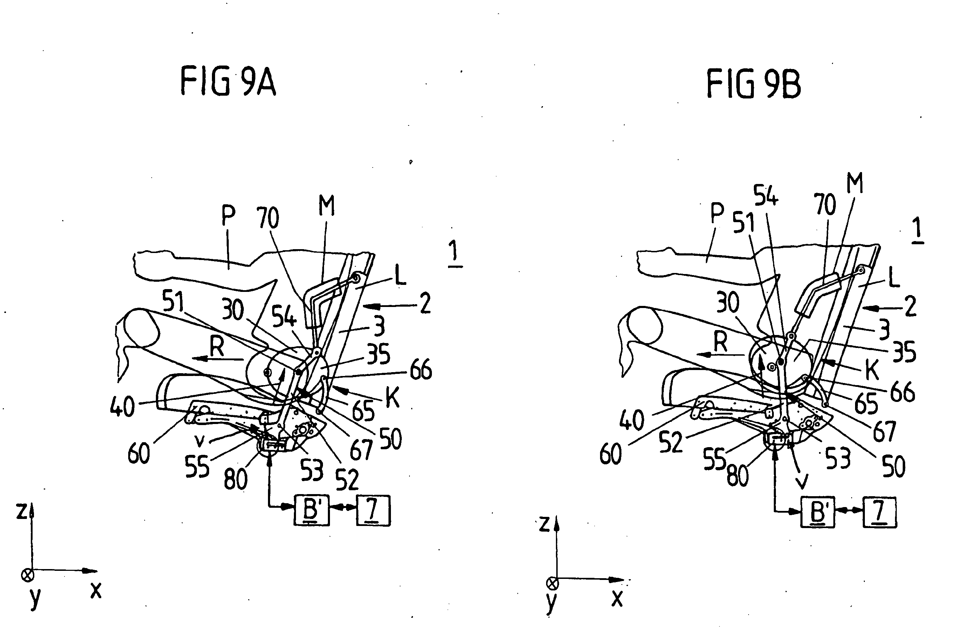

- Fig. 9A-9B:: eine schematische Seitenansicht einer Insassenrückhalteeinrichtung, mit einer ausstellbaren Lehnenwange und einem als Polster ausgebildeten Lehnenwangenkörper der Lehenwange, der schwenkbar an einem Lehnenrahmen gelagert ist, um die Lehnenwange aus einer Ruheposition (Fig. 9A) in eine Betriebsposition (Fig. 9B) auszudehnen; und

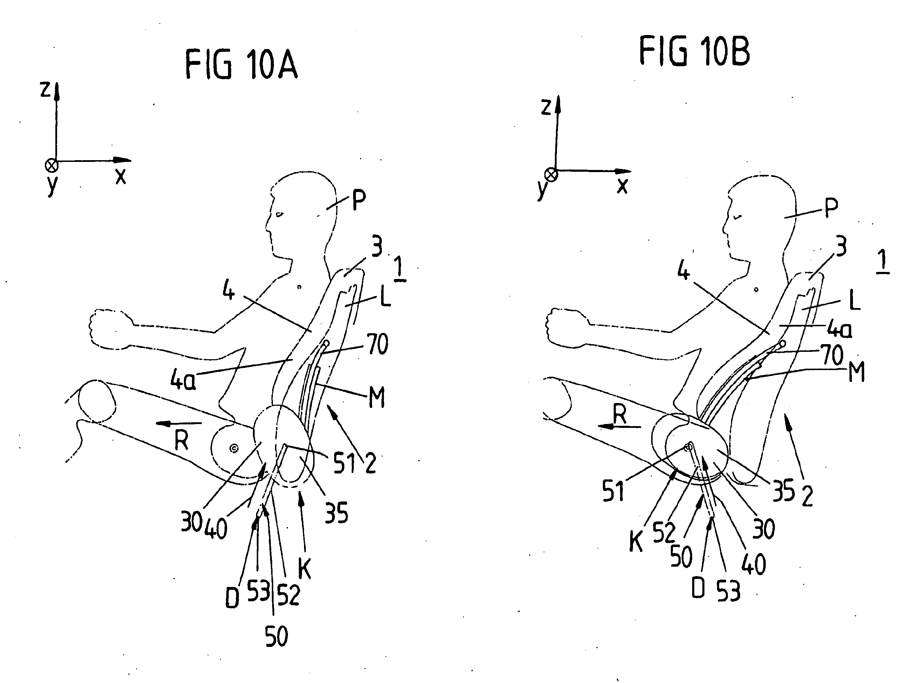

- Fig. 10A-10B:: eine schematische Seitenansicht eine Abwandlung einer Insassenrückhalteeinrichtung der in den Figuren 9A und 9B beschriebenen Art.

Figur 7A zeigt im Zusammenhang mit Figur 7B eine Insassenrückhalteeinrichtung 1, mit einem als Fahrersitz ausgebildeten Kraftfahrzeugsitz 2, der eine Rückenlehne 3 aufweist, die - bezogen auf einen in ein Kraftfahrzeug eingebauten Zustand - um eine parallel zur Fahrzeugquerachse y verlaufende Fahrzeugachse schwenkbar (neigungsveränderlich) an einem eine Sitzfläche ausbildenden Sitzteil 60 (nicht gezeigt) gelagert ist, das sich entlang einer Erstreckungsebene erstreckt, die durch die Fahrzeuglängsachse x und die Fahrzeugquerachse y aufgespannt wird.

Die Insassenrückhalteeinrichtung 1 dient zum Schutz eines den Kraftfahrzeugsitz 2 belegenden Insassen P vor einer vom Außenraum A her erfolgenden Krafteinwirkung auf die Außenseite 5a der Tragstruktur 5 entlang einer Richtung, die zumindest eine Komponente entlang der Fahrzeugquerachse y aufweist. Derartige Krafteinwirkungen treten üblicherweise bei einem Seitencrash auf, bei dem ein Kollisionsobjekt (z.B. ein Kraftfahrzeug) mit einer seitlichen Karosserie, vorliegend der Außenseite 5a der Tragstruktur 5, des Kraftfahrzeuges kollidiert.

Die Rückenlehne 3 des Kraftfahrzeugsitzes 2 bildet eine Anlagefläche für einen den Kraftfahrzeugsitz 2 bestimmungsgemäß belegenden Insassen P, wobei die Anlagefläche bei einer Aufrechtstellung der Rückenlehne 3 entlang einer Erstreckungsebene verläuft, die durch eine parallel zur vertikalen Fahrzeugachse z orientierte Fahrzeugachse und durch eine parallel zur Fahrzeugquerachse y erstreckte Fahrzeugachse aufgespannt wird. Von der Rückenlehne 3 ragen beidseitig von entlang der Rückenlehne 3 erstreckten Randbereichen der Rückenlehne 3 Lehnenwangen 4 ab, die bei Aufrechtstellung der Rückenlehne 3 längs erstreckt entlang der vertikalen Fahrzeugachse z verlaufen.

Dabei ist bei dem als Fahrersitz ausgebildeten Kraftfahrzeugsitz 3 eine der beiden Lehnenwangen 4 benachbart zu einer Tragstruktur 5 angeordnet, bei der es sich vorliegend um eine (seitliche) Türstruktur handelt, die auch die B-Säule bzw. einen Teil der B-Säule umfassen kann.

Die besagte Lehnenwange 4 weist eine Außenseite 4a auf, die einer dem Innenraum I des Kraftfahrzeuges zugewandten Innenseite 5b der Tragstruktur 5 zugewandt ist und dieser entlang der Fahrzeugquerachse y - bezogen auf einen in ein Kraftfahrzeug integrierten Zustand der Tragstruktur 5 - gegenüber liegt.

Zum Vorpositionieren eines zwischen der Außenseite 4a der Lehnenwange 4 und der Innenseite 5b der Tragstruktur 5 aufzublasenden Gassackes 6 weist die Lehnenwange 4 einen Lehnenwangenkörper K auf, der derart beweglich an einem Lehnerahmen L, der ein Grundgerüst der Rückenlehne 3 bildet, gelagert ist, dass der Lehnenwangenkörper K aus einer Ruheposition entlang einer Ausdehnungsrichtung R, die in die Geradeausfahrtrichtung weist, in eine Betriebsposition verlagerbar ist. Hierdurch wird eine Ausdehnung der Lehnenwange 4 in der Ausdehnungsrichtung R hervorgerufen.

Der verlagerbare Lehnenwangenkörper K umfasst einen Modulträger T für ein Gassackpaket M, das durch den Gassack 6 und einen vom Gassack 6 umschlossenen Gasgenerator G gebildet wird. Der Modulträger T ist flächig ausgeformt (z.B. aus einem Metallblech) und erstreckt sich in der Aufrechtstellung der Rückenlehne 3 entlang der vertikalen Fahrzeugachse z. Dabei weist der Modulträger T einen - von der Tragstruktur 5 her betrachtet - konvex gewölbten Randbereich T' auf, dessen Wölbung eine Aufnahme für das Gassackpaket M bildet, die das Gassackpaket M im Querschnitt zumindest abschnittsweise umgreift.

Zum Ausdehnen der Lehnenwange 4 ist der Modulträger T über einen ersten Hebel H und einen zweiten Hebel H' am Lehnenrahmen L der Rückenlehne 3 schwenkbar gelagert, und zwar jeweils um eine - bezogen auf die Aufrechtstellung der Rückenlehne L - parallel zur vertikalen Fahrzeugachse z verlaufende Achse, so dass der Modulträger T beim Verschwenken aus der Ruheposition gemäß Fig. 7A in Richtung auf die Betriebsposition (vgl. Fig. 7B) entlang der Ausdehnungsrichtung R, die vorliegend parallel zur Fahrzeuglängsachse x verläuft, dem den Kraftfahrzeugsitz 2 belegenden Insassen P entlang der Fahrzeugquerachse y angenähert wird. Der Modulträger T sowie das daran gelagerte Gassackpaket M und die Hebel H, H' zum Koppeln des Modulträgers T mit dem Lehnenrahmen L sind mit einer Hülle umgeben (z.B. einem Schaum), die zusammen mit den umhüllten Komponenten die zustellbare Lehnenwange 4 des Kraftfahrzeugsitzes 2 bildet.

Zum Erkennen eines bevorstehenden Seitencrashs, d.h., einer Krafteinwirkung auf die Außenseite 5a der Tragstruktur 5, die eine Komponente entlang der Fahrzeugquerachse y enthält, ist eine Pre-Crash-Detektionsvorrichtung 7 vorgesehen, die beim Erkennen einer derartigen Krafteinwirkung eine Bewegungserzeugungsvorrichtung B auslöst, die den Lehnenwangenkörper K in seine Betriebsposition verschwenkt, so dass die Lehnenwange 4 entlang der Ausdehnungsrichtung verlängert ist und die der Außenseite 4a der Lehnenwange 4 abgewandte Innenseite 4b der Lehnenwange 4 eine Anlagefläche für den Insassen P bildet (vgl. Figur 2A).

Nach erfolgter Ausstellung der Lehnenwange 4 zündet ein Crashsensor 7 bei Sensierung eines Crashs (d.h., einer konkreten Krafteinwirkung auf die Außenseite 5a der Tragstruktur 5) gemäß Figur 2B den Gasgenerator G, um den Gassack 6 aufzublasen. Ggf. kann es sich bei dem Crashsensor 7 auch um eine Pre-Crash-Detektionsvorrichtung handeln.

Der Gassack 6 stützt sich beim Aufblasen an der Innenseite 5b der Tragstruktur 5 ab, so dass eine Gegenkraft F auf die Lehnewange 4 einwirkt, die über die flächig am Insassen P anliegende Innenseite 4b der Lehnenwange 4 in den Insassen P eingeleitet wird.

Die Figuren 2A bis 2C zeigen den in den Figuren 1A bis 1C gezeigten Ablauf, wobei im Unterschied zu den Figuren 1A bis 1C der Gassack 6 durch eine frühzeitige Zündung des Gasgenerators G durch den Crashsensor 7 in Form einer Pre-Crash-Detektionsvorrichtung bereits vor dem Beginn einer Intrusion der Tragstruktur 5 - beispielsweise durch ein vom Außenraum A her auf die Außenseite 5a der Tragstruktur auftreffendes Kollisionsobjekt - über den Lehnenwange 4 auf den Insassen P einwirkt. Hierdurch kann mit Vorteil der Raum zwischen der Tragstruktur 5 (z.B. Türstruktur) und dem Insassen P zum Schutz des Insassen aktiv vergrößert werden.

Bei dem in den Figuren 3A bis 3C gezeigten Ablauf der Lehnenwangenaktuierung wird im Unterschied zu den Figuren 1A bis 1C ein Gassack 6 mit zwei Kammern 6a, 6b eingesetzt. Dabei wird zunächst eine innere erste Kammer 6a, die innerhalb einer äußeren zweiten Kammer 6b angeordnet ist, mit Gas befüllt, wobei die beiden Kammern 6a, 6b mittels zumindest einer Durchströmöffnung miteinander verbunden sind. Aufgrund des vergleichsweise geringen Volumens der ersten Kammer 6a kann diese sehr schnell und hart aufgeblasen werden, so dass über die erste Kammer 6a eine sehr schnelle, mechanische Ankopplung des Kraftfahrzeugsitzes 2 an die Tragstruktur 5 möglich ist. Die Geschwindigkeit, mit der diese Ankopplung von statten geht, kann mit Vorteil über das Volumen und den Überström-Querschnitt (Größe der Durchströmöffnung) zwischen erster und umgebender zweiter Kammer 6a, 6b eingestellt werden.

Im Unterschied zu dem in den Figuren 1A bis 1C gezeigten Ablauf der Lehnenwangenausdehnung / Gassackaktivierung ist bei den Figuren 4A bis 4C der Kraftfahrzeugsitz 2 zusätzlich entlang der Fahrzeugquerachse y verschieblich am Kraftfahrzeugboden gelagert und mittels einer Bewegungserzeugungsvorrichtung B''' von der Tragstruktur 5 weg bewegbar. Die Aktivierung der Bewegungserzeugungsvorrichtung B''' erfolgt dabei über die mit Bewegungserzeugungsvorrichtung B''' zusammenwirkende Pre-Crash-Detektionsvorrichtung 7, die die Bewegungserzeugungsvorrichtung B''' beim Erkennen eines Seitencrashs aktiviert.

Zur Erhöhung des Schutzes des Insassen P bei einem Seitencrash mit großer Frontalkomponente, d.h., die Komponente der Bewegungsrichtung eines Kollisionsobjektes entlang der Fahrzeugquerachse y ist kleiner als diejenige entlang der Fahrzeuglängsachse x, ist der Gassack 6 entsprechend den Figuren 5A bis 5C zusätzlich dazu ausgebildet, sich im aufgeblasenen Zustand zumindest teilweise entlang der Fahrzeugquerachse y vor den Insassen P zu schieben.

Figur 6A bis 6C zeigen den in den Figuren 1A bis 1C dargestellten Verlauf der Aktivierung der Insassenrückhalteeinrichtung 1, wobei im Unterschied zu den Figuren 1A bis 1C der Modulträger T" als ein den Gassack 6 und den Gasgenerator G (in den Figuren 6A bis 6C nicht gezeigt) aufnehmendes starres Gehäuse ausgebildet ist, das zum Schutz des Insassen P vor einer vom Außenraum A her auf die Außenseite 5a der Tragstruktur 5 erfolgenden Krafteinwirkung zusätzlich linear verschieblich entlang der Fahrzeugquerachse y an der Lehnenwange 4, und zwar am Lehnenrahmen L, gelagert ist, so dass es aus einer ersten Position, in der das Gehäuse T" vollkommen innerhalb der Lehnenwange 4 des Kraftfahrzeugsitzes 2 angeordnet ist, in eine zweite Position bewegbar ist, in der das Gehäuse T" vorzugsweise durch Drücken gegen die Innenseite 5b der Tragstruktur 5 entlang der Fahrzeugquerachse y mechanisch an die Tragstruktur 5 ankoppelt. Hierdurch wird einer Intrusion und somit einem Verdämmen des Absorptionsweges zwischen der Innenseite 5b der Tragstruktur 2 und der Außenseite 4a der Lehnenwange 4 entgegengewirkt, wenn ein Kollisionsobjekt mit einer Bewegungskomponente entlang der Fahrzeugquerachse y vom Außenraum A her auf die Außenseite 5a der Tragstruktur 5 auftrifft.

Zusätzlich besteht die Möglichkeit, dass das Gehäuse T" beim Verlagern in die zweite Position derart gegen die Innenseite 5b der Tragstruktur 5 gedrückt wird, dass eine Kraft in den Kraftfahrzeugsitz 2 eingeleitet wird, die diesen entlang der Fahrzeugquerachse y zum Innenraum I hin verschiebt. Hierdurch wird der wirksame Absorptionsweg zum Schutz des Insassen P verlängert.

Eine Anlageseite des Gehäuses T", die beim Bewegen aus der ersten Position in die zweite Position zur Anlage an die Innenseite 5b der Tragstruktur 5 gebracht wird, ist vorzugsweise besonders stabil ausgebildet, damit eine gute mechanische Ankopplung an die Tragstruktur 5 möglich ist. In der Ruheposition ist jene Anlageseite bevorzugt bündig in die der Tragstruktur 5 zugewandte Außenseite 4a der Lehnenwange 4 eingelassen.

Des Weiteren wird durch das Verschieben des Gehäuses T" in seine zweite Position (vgl. Fig. 6C) ein öffenbarer Bereich 20 des Gehäuses T" durch den hindurch sich der Gassack 6 - im geöffneten Zustand des öffenbaren Bereiches 20 - in den Innenraum I des Kraftfahrzeuges entfalten kann, entlang der Fahrzeugquerachse y zwischen der Tragstruktur 5 und dem Kraftfahrzeugsitz 2 positioniert, so dass sich der Gassack 6 durch den (geöffneten) öffenbaren Bereich 20 hindurch frei (ungehindert) entlang der Fahrzeuglängsachse x entfalten kann, um den Insassen P vor einem eindringenden Kollisionsobjekt zu schützen.

Damit das Verfahren des Gehäuses T" des Gassackes 6 rechtzeitig erfolgen kann, ist eine Bewegungserzeugungsvorrichtung B" mit der Pre-Crash-Detektionsvorrichtung 7 gekoppelt, die beim Erkennen eines bevorstehenden Seitencrashs das Gehäuse T" in dessen zweite Position verfährt.

Figur 8A zeigt im Zusammenhang mit Figur 8B eine Abwandlung der in der Figur 7A bzw. 7B gezeigten Insassenrückhalteeinrichtung 1, wobei im Unterschied zu den Figuren 7A und 7B der das Gassackpaket M umfassende Lehnenwangenkörper K nicht schwenkbar am Lehnenrahmen L gelagert ist, sondern linear verschieblich.

Hierzu geht von einem oberen Abschnitt (bezogen auf die vertikale Fahrzeugachse z) des Lehnenwangenkörpers K ein erster Hebel H ab, der über eines seiner beiden Enden E am Lehnenkörper K und über sein anderes Ende am Lehnenrahmen L des Kraftfahrzeugsitzes schwenkbar gelagert ist, wobei der Lagerpunkt des Hebels H am Lehnenrahmen L entlang der vertikalen Fahrzeugachse z unterhalb des lehnenwangenkörperseitigen Lagerpunktes angeordnet ist.

Um zu einer linear verschieblichen Lagerung des Lehnenwangenkörpers K am Lehnenrahmen L zu gelangen, ist ein weiterer, zweiter Hebel H' vorgesehen, der ebenfalls den Lehnenwangenkörper K mit dem Lehnenrahmen L verbindet. Hierbei ist der zweite Hebel H' mit seinem einem Ende E entlang der vertikalen Fahrzeugachse z an einem unteren Abschnitt des Lehnenwangenkörpers K und mit seinem anderen Ende E' am Lehnenrahmen L schwenkbar gelagert, und zwar oberhalb des anderen Endes E' des ersten Hebels H. Dementsprechend kreuzt ein mittlerer Abschnitt 10 des ersten Hebels H einen mittleren Abschnitt 10 des zweiten Hebels H', wobei diese beiden Abschnitte 10 gegeneinander verdrehbar miteinander verbunden sind. Die Achsen um die die beiden Hebel H, H' schwenkbar mit dem Lehnenwangenkörper K, mit dem Lehnenrahmen L bzw. miteinander befestigt sind, verlaufen zueinander parallel und entlang der Fahrzeugquerachse y. Hieraus ergibt sich eine entlang der Fahrzeuglängsachse x (Ausdehnungsrichtung R) verschiebliche Lagerung des Lehnenwangenkörpers K am Lehnenrahmen L. Eine Bewegung des Lehnenwangenkörpers K aus der Ruheposition - die beiden Hebel H, H' verlaufen im Wesentlichen parallel zueinander entlang der vertikalen Fahrzeugachse z (vgl. Fig. 8A) - in die Betriebsposition, in der sich die beiden Hebel H, H' entlang der Fahrzeuglängsachse x ausrichten (vgl. Fig. 8B), erfolgt mittels einer mit der Pre-Crash-Detektionsvorrichtung 7 zusammenwirkenden Bewegungserzeugungs-vorrichtung B, die beispielsweise an einem der beiden Hebel H, H' oder direkt am Lehnenwangenkörper K angreifen kann.

Figur 9A zeigt im Zusammenhang mit Figur 9B eine weitere Abwandlung der in den Figuren 7A bis 8B gezeigten Insassenrückhalteeinrichtungen 1, bei der der Lehnenwangenkörper K als ein flächiges Polster 30 mit rundlicher Kontur ausgebildet ist, das zum Ausdehnen der das Polster 30 umgebenden Lehnenwange 4 (in den Figuren 9A und 9B nicht gezeigt) über einen ersten, entlang einer Erstreckungsrichtung 40 erstreckten Arm 50 um eine parallel zur Fahrzeugquerachse y verlaufende Drehachse D an einem Sitzteil 60 des Kraftfahrzeugsitzes 2, das eine im Wesentlichen horizontale Sitzfläche ausbildet, gelagert ist. Dementsprechend wird das Polster 30 beim Verschwenken des ersten Armes 50 in Geradeausfahrtrichtung entlang der Fahrzeuglängsachse x (Ausdehnungsrichtung R) verlagert, so dass sich die Lehnenwange 4 entlang der Fahrzeuglängsachse x ausdehnt. Das Polster 30 besteht vorzugsweise aus einem energieabsorbierenden Material, insbesondere aus einem Schaum und ist in der Betriebsposition entlang der vertikalen. Fahrzeugachse z auf Höhe des Beckens eines den Kraftfahrzeugsitz 2 belegenden Insassen P angeordnet, um diesen vor eindringenden Objekten zu schützen.

Zur schwenkbaren Lagerung am Sitzteil 60 ist der erste Arm 50 über einen Verbindungsbereich 51 zentral und starr mit einer der Innenseite 5b der Tragstruktur 5 zugewandten Außenseite 35 des Polsters verbunden. Die Verbindung kann allerdings auch drehbar ausgebildet sein, damit das Polster 30 beim Verschwenken seine Winkellage im Raum beibehalten kann. Der Verbindungsbereich 51 ist über einen mittleren Abschnitt 52 des ersten Armes 50 mit einem Lagerbereich 53 des ersten Armes 50 verbunden, über den der erste Arm seitlich am Sitzteil 60, und zwar an einer der Tragstruktur 5 zugewandten Seite des Sitzteiles um die Drehachse D schwenkbar gelagert ist.

Vom Verbindungsbereich 51 geht eine flexible, längs erstreckte Lehnenwangenstütze 70 ab, die über einen ersten freien Endabschnitt 54 des Armes 50 mit dem Arm 50 bzw. dem Verbindungsbereich 51 verbunden ist. Die Lehnenwangenstütze 70 bildet zusammen mit dem Polster 30 ein Gerüst für die Lehnenwange 4 bildet und mit dem Lehnenrahmen L etwa auf Höhe des Thorax eines den Kraftfahrzeugsitz bestimmungsgemäß belegenden Insassen P verbunden ist. Die Lehenwangenstütze dient daher mit Vorteil auch als ein Träger des ggf. flexiblen Gassackpaketes M. Beim Verlagern des Polsters 30 entlang der Fahrzeuglängsachse x in seine Betriebsposition wird die Lehnenwangenstütze 70 mitgenommen wobei sie sich streckt.

Zum Verschwenken des ersten Armes 50 um die Drehachse D ist der Lagerbereich 53 vorzugsweise einstückig mit einem als Verzahnung ausgebildeten zweiten freien Endabschnitt 55 des ersten Armes 50 verbunden, die zum Verschwenken des ersten Armes mit einem Antriebsrad 80 kämmt, das mittels einer mit der Pre-Crash-Detektionsvorrichtung 7 zusammenwirkende Bewegungserzeugungsvorrichtung B' angetrieben wird, die dazu ausgebildet ist, beim Erkennen eines bevorstehenden Seitencrashs das Antriebsrad 80 zum Bewegen des Polsters 30 anzutreiben.

Zum Unterstützen der Bewegung des Polster 30 aus der Ruheposition in die Betriebsposition, ist bevorzugt ein zweiter Arm 65 vorgesehen, der über ein erstes freies Ende 66 an einem Randbereich des Polster 30 und über ein dem ersten Ende 66 gegenüberliegendes zweites freies Ende 67 an der Rückenlehne 3, und zwar am Lehnenrahmen 8, gelagert ist. Hierbei erfolgt die Lagerung des zweiten Armes 65 jeweils drehbar um eine parallel zur Fahrzeugquerachse y verlaufende Achse.

Figur 10A zeigt im Zusammenhang mit Figur 10B eine weitere Insassenrückhalteeinrichtung 1 der in den Figuren 9A bis 9B gezeigten Art, wobei im Unterschied zu den Figuren 9A und 9B kein zusätzlicher zweiter Arm 65 vorhanden ist. Die Bewegungserzeugungsvorrichtung B' und die Pre-Crash-Detektionsvorrichtung 7 sind analog zu den Figuren 9A und 9B ausgeführt, jedoch in den Figuren 10A und 10B nicht dargestellt.

Die Bewegungserzeugungsvorrichtungen B, B', B" und B''' die vorliegend zum Einsatz kommen, können sowohl reversibel als auch irreversibel (z.B. pyrotechnisch) arbeiten. Grundsätzlich kommen als Bewegungserzeugungsvorrichtungen Federn, Gasgeneratoren, Elektromotoren und Pneumatiken in Frage.

Zusammenfassend ergeben sich aus der erfindungsgemäßen Lösung u.a. folgende Vorteile: Bereitstellung von erhöhtem Schutzpotential durch flächige Einleitung von höheren Kräften ohne Kraftspitzen in die Lehnenwange bzw. den zu schützenden Insassen. Vergleichsweise frühere Einleitung dieser Kräfte. Ggf. größere Absorptionswege für den Gassack 6 sowie höhere Entfaltungssicherheit durch Vorpositionierung des Gassackes 6. Bessere Ankoppelung des Insassen P an den Kraftfahrzeugsitz 2. Ggf. Reversibilität der Vorpositionierung von Lehnenwange 4 und Gassack 6. Die erfindungsgemäße Insassenrückhalteeinrichtung 1 ist in allen Kraftfahrzeugen, die mit einer Pre-Crash-Detektionsvorrichtung (z.B. Radar) ausgestattet sind, einsetzbar.

## Patentansprüche

1. Insassenrückhalteeinrichtung für ein Kraftfahrzeug, mit
- einer von einer Rückenlehne (3) eines Kraftfahrzeugsitzes (2) abstehenden Lehnenwange (4) zum seitlichen Abstützen eines den Kraftfahrzeugsitz (2) bestimmungsgemäß belegenden Insassen (P), die eine dem Insassen (P) abgewandte Außenseite (4a) aufweist,
- einer Tragstruktur (5) eines Kraftfahrzeuges, die, bezogen auf einen in das Kraftfahrzeug eingebauten Zustand, eine einem Außenraum (A) des Kraftfahrzeuges zugewandte Außenseite (5a) und eine dem Außenraum (A) des Kraftfahrzeuges abgewandte Innenseite (5b) aufweist, die der Außenseite (4a) der Lehnenwange (4) zugewandt ist, und
- einem im Kraftfahrzeugsitz (2) angeordneten Gassack (6), der zum Schutz des Insassen (P) angesichts einer vom Außenraum (A) her auf die Außenseite (5a) der Tragstruktur (5) erfolgenden Krafteinwirkung aufblasbar ist, wobei sich der Gassack (6) im aufgeblasenen Zustand an der Innenseite (5b) der Tragstruktur (5) abstützt und eine von der Innenseite (5b) der Tragstruktur (5) her auf die Außenseite (4a) der Lehnenwange (4) gerichtete Gegenkraft (F) auf die Außenseite (4a) der Lehnenwange (4) ausübt,
**gekennzeichnet durch**
eine Pre-Crash-Detektionsvorrichtung (7) zum Erkennen einer bevorstehenden, vom Außenraum (A) her auf die Außenseite (5a) der Tragstruktur (5) erfolgenden Krafteinwirkung, die beim Erkennen einer bevorstehenden Krafteinwirkung eine Ausdehnung der Lehnenwange (4) in einer entlang der Tragstruktur (5) verlaufenden Ausdehnungsrichtung (R) aktiviert.

2. Insassenrückhalteeinrichtung nach Anspruch 1, **dadurch gekennzeichnet, dass** eine dem Insassen (P) zugewandte und der Innenseite (5b) der Tragstruktur (5) abgewandte Innenseite (4b) der Lehnenwange (4) durch die Ausdehnung der Lehnenwange (4) eine Anlagefläche für den Insassen (P) bildet, über die die vom Gassack (6) ausgeübte Gegenkraft (F) in den Insassen (P) eingeleitet werden kann.

3. Insassenrückhalteeinrichtung nach Anspruch 1 oder 2, **dadurch gekennzeichnet, dass** die Lehnenwange (4) einen entlang der Ausdehnungsrichtung (R) zwischen einer Ruheposition und einer Betriebsposition hin und her bewegbaren Lehnenwangenkörper (K) umgibt.

4. Insassenrückhalteeinrichtung nach Anspruch 3, **dadurch gekennzeichnet, dass** die Ausdehnung der Lehnenwange (4) entlang der Ausdehnungsrichtung (R) durch eine Bewegung des Lehnenwangenkörpers (K) aus der Ruheposition in die Betriebsposition bewirkt wird.

5. Insassenrückhalteeinrichtung nach einem der vorangegangenen Ansprüche, **dadurch gekennzeichnet, dass** der Gassack (6) an der Außenseite (4a) der Lehnenwange (4) angeordnet ist.

6. Insassenrückhalteeinrichtung nach einem der vorangegangenen Ansprüche, **gekennzeichnet durch** einen Modulträger (T), zum Tragen eines zumindest den Gassack (6) umfassenden Gassackpaketes (M).

7. Insassenrückhalteeinrichtung nach einem der vorangegangenen Ansprüche, **gekennzeichnet durch** einen Gasgenerator (G) zum Aufblasen des Gassackes (6).

8. Insassenrückhalteeinrichtung nach den Ansprüchen 6 und 7, **dadurch gekennzeichnet, dass** das Gassackpaket (M) den Gasgenerator (G) umfasst.

9. Insassenrückhalteeinrichtung nach einem der Ansprüche 3 oder 4 und nach Anspruch 6 oder einem der Ansprüche 7 oder 8 soweit rückbezogen auf Anspruch 6, **dadurch gekennzeichnet, dass** der Lehnenwangenkörper (K) den Modulträger (T) samt Gassackpaket (M) umfasst.

10. Insassenrückhalteeinrichtung nach einem der vorangegangenen Ansprüche, **dadurch gekennzeichnet, dass** die Rückenlehne (3) einen Lehnenrahmen (L) als einen Grundkörper der Rückenlehne (3) aufweist.

11. Insassenrückhalteeinrichtung nach Anspruch 10 und nach Anspruch 3 oder einem der Ansprüche 4 bis 9 soweit rückbezogen auf Anspruch 3, **dadurch gekennzeichnet, dass** der Lehnenwangenkörper (K) zum Bewegen aus der Ruheposition in die Betriebsposition am Lehnenrahmen (L) beweglich gelagert ist.

12. Insassenrückhalteeinrichtung nach Anspruch 11, **dadurch gekennzeichnet, dass** der Lehnenwangenkörper (K) über einen ersten und einen zweiten Hebel (H, H') beweglich am Lehnrahmen (L) gelagert ist, wobei die beiden Hebel (H, H') jeweils über eines ihrer Enden (E) am Lehnenwangenkörper (K) schwenkbar gelagert sind, und wobei die beiden Hebel (H, H') über das jeweilige andere Ende (E') schwenkbar am Lehnenrahmen (L) gelagert sind.

13. Insassenrückhalteeinrichtung nach Anspruch 12, **dadurch gekennzeichnet, dass** die beiden Hebel (H, H') über jeweils einen mittleren, die beiden Enden (E, E') miteinander verbindenden Abschnitt (10) gegeneinander verschwenkbar aneinander festgelegt sind.

14. Insassenrückhalteeinrichtung nach Anspruch 12, **dadurch gekennzeichnet, dass** die beiden Hebel (H, H') jeweils um eine entlang der Lehnenwange (4) verlaufende Achse (15) schwenkbar am Lehnenrahmen (L) gelagert sind.

15. Insassenrückhalteeinrichtung nach einem der Ansprüche 12 bis 14, **gekennzeichnet durch** eine mit der Pre-Crash-Detektionsvorrichtung (7) zusammenwirkende Bewegungserzeugungsvorrichtung (B), die dazu ausgebildet ist, beim Erkennen einer bevorstehenden Krafteinwirkung auf die Außenseite (5a) der Tragstruktur (5), zumindest einen der beiden Hebel (H, H'), insbesondere beide Hebel (H, H'), zu verschwenken, um den Lehnenwangenkörper (K) aus der Ruheposition in die Betriebsposition zu verlagern.

16. Insassenrückhalteeinrichtung nach Anspruch 11 oder einem der Ansprüche 12 bis 15 soweit rückbezogen auf Anspruch 11, **dadurch gekennzeichnet, dass** zur beweglichen Lagerung des Lehnenwangenkörpers (K) am Lehnerahmen (L) ein Führungsmittel vorgesehen ist.

17. Insassenrückhalteeinrichtung nach Anspruch 16, **dadurch gekennzeichnet, dass** das Führungsmittel zumindest eine am Lehnenrahmen (L) ausgebildete Ausnehmung aufweist, in die ein am Lehnenwangenkörper (K) ausgebildeter Stift eingreift, so dass der Lehnenwangenkörper (K) entlang der Ausdehnungsrichtung (R) am Lehnenrahmen (L) entlang gleiten kann.

18. Insassenrückhalteeinrichtung nach Anspruch 6 oder einem der Ansprüche 7 bis 17 soweit rückbezogen auf Anspruch 6, **dadurch gekennzeichnet, dass** der Modulträger (T) flächig ausgebildet ist und dass der Modulträger (T) einen entlang der Lehnenwange (4) erstreckten Randbereich (T') mit einer entlang der Lehnenwange (4) erstreckten konkaven Wölbung aufweist, die eine Aufnahme für das Gassackpaket (M) bildet.

19. Insassenrückhalteeinrichtung nach Anspruch 6 oder einem der Ansprüche 7 bis 17 soweit rückbezogen auf Anspruch 6, **dadurch gekennzeichnet, dass** der Modulträger als ein das Gassackpaket (M) umgebendes Gehäuse (T") ausgebildet ist, das dazu eingerichtet und vorgesehen ist, aus einer ersten Position in eine zweite Position entlang einer von der Außenseite (4a) der Lehnenwange (4) zur Innenseite (5b) der Tragstruktur (5) gerichteten Bewegungsrichtung (R') bewegt zu werden, wenn die Pre-Crash-Detektionsvorrichtung (7) eine bevorstehende Krafteinwirkung auf die Außenseite (5a) der Tragstruktur (5) erkennt.

20. Insassenrückhalteeinrichtung nach Anspruch 19, **dadurch gekennzeichnet, dass** der Modulträger (T") zumindest einen öffenbaren Bereich (20) aufweist, durch den hindurch der Gassack (6) in einen Innenraum (I) des Kraftfahrzeuges entfaltbar ist.

21. Insassenrückhalteeinrichtung nach Anspruch 20, **dadurch gekennzeichnet, dass** der öffenbare Bereich (20) bei der Verlagerung des Modulträgers (T") aus der ersten Position in die zweite Position zwischen der Innenseite (5b) der Tragstruktur (5) und der Außenseite (4a) der Lehnenwange (4) positioniert wird, so dass sich der Gassack (6) entlang der Ausdehnungsrichtung (R) zwischen der Innenseite (5b) der Tragstruktur (5) und der Außenseite (4a) der Lehnenwange (4) entfalten kann.

22. Insassenrückhalteeinrichtung nach einem der Ansprüche 19 bis 21, **gekennzeichnet durch** eine mit der Pre-Crash-Detektionsvorrichtung (7) zusammenwirkende Bewegungserzeugungsvorrichtung (B"), die dazu eingerichtet und vorgesehen ist, den Modulträger (T") aus der ersten Position in die zweite Position zu bewegen, wenn die Pre-Crash-Detektionsvorrichtung (7) eine bevorstehende Krafteinwirkung auf die Außenseite (5a) der Tragstruktur (5) erkennt.

23. Insassenrückhalteeinrichtung nach Anspruch 3 oder einem der Ansprüche 4 bis 11 soweit rückbezogen auf Anspruch 3, **dadurch gekennzeichnet, dass** der Lehnenwangenkörper (K) ein energieabsorbierendes Polster (30) umfasst.

24. Insassenrückhalteeinrichtung nach Anspruch 23, **dadurch gekennzeichnet, dass** das Polster (30) in der Betriebsposition des Lehnenwangenkörpers (K) quer zur Ausdehnungsrichtung (R) zwischen der Innenseite (5b) der Tragstruktur (5) und dem Becken eines den Kraftfahrzeugsitz (2) bestimmungsgemäß belegenden Fahrzeuginsassen (P) angeordnet ist.

25. Insassenrückhalteeinrichtung nach Anspruch 23 oder 24, **dadurch gekennzeichnet, dass** das Polster (30) zumindest über einen entlang einer Erstreckungsrichtung (40) längs erstreckten ersten Arm (50) aus der Ruheposition in die Betriebsposition schwenkbar am Kraftfahrzeugsitz (2) gelagert ist.

26. Insassenrückhalteeinrichtung nach Anspruch 25, **dadurch gekennzeichnet, dass** der erste Arm (50) über einen Verbindungsbereich (51)an einer der Tragstruktur (5) zugewandten Außenseite (35) des Polsters (30) festgelegt ist.

27. Insassenrückhalteeinrichtung nach Anspruch 26, **dadurch gekennzeichnet, dass** der Verbindungsbereich (51) über einen mittleren Abschnitt (52) des ersten Armes (50) mit einem Lagerbereich (53) des ersten Armes (50) verbunden ist, über den der erste Arm (50) an einem Sitzteil (60) des Kraftfahrzeugsitzes (2) um eine Drehachse (D) schwenkbar gelagert ist.

28. Insassenrückhalteeinrichtung nach den Ansprüchen 26 oder 27, **dadurch gekennzeichnet, dass** vom Verbindungsbereich (51) entlang der Erstreckungsrichtung (40) ein freier erster Endabschnitt (54) des ersten Armes (50) absteht, der über eine flexible, längs erstreckte Lehnenwangenstütze (70), die eine Versteifung für die Lehnenwange (4) bildet, mit der Rückenlehne (3) verbunden ist, wobei die Lehnenwangenstütze (70) quer zu ihrer Längserstreckung entlang der Ausdehnungsrichtung (R) verlagert wird, wenn das Polster (30) aus der Ruheposition in die Betriebsposition bewegt wird.

29. Insassenrückhalteeinrichtung nach Anspruch 27 oder nach Anspruch 28 soweit rückbezogen auf Anspruch 27, **dadurch gekennzeichnet, dass** vom Lagerbereich (53) entlang der Erstreckungsrichtung (40) ein freier zweiter Endabschnitt (55) des ersten Armes (50) absteht.

30. Insassenrückhalteeinrichtung nach Anspruch 29, **dadurch gekennzeichnet, dass** der freie zweite Endabschnitt (55) eine Verzahnung (V) aufweist, die zum Verschwenken des ersten Armes (50) um die Drehachse (D) derart, dass das Polster (30) aus der Ruheposition in die Betriebsposition bewegt wird, mit einem Koppelelement in Form eines Antriebsrades (80) kämmen kann.

31. Insassenrückhalteeinrichtung nach Anspruch 29, **dadurch gekennzeichnet, dass** der freie zweite Endabschnitt (55) zum Verschwenken des ersten Armes (50) um die Drehachse (D) derart, dass das Polster (30) aus der Ruheposition in die Betriebsposition bewegt wird, dazu ausgebildet ist, über ein längs erstrecktes Koppelelement mit einer Bewegungserzeugungsvorrichtung verbunden zu werden.

32. Insassenrückhaltevorrichtung nach einem der Ansprüche 30 oder 31, **gekennzeichnet durch** eine mit der Pre-Crash-Detektionsvorrichtung (7) zusammenwirkende Bewegungserzeugungsvorrichtung (B'), die dazu eingerichtet und vorgesehen ist, das Koppelelement (80) zum Bewegen des Polsters (30) aus der Ruheposition in die Betriebsposition anzutreiben, wenn die Pre-Crash-Detektionsvorrichtung (7) eine bevorstehende Krafteinwirkung auf die Außenseite (5a) der Tragstruktur (5) erkennt.

33. Insassenrückhaltevorrichtung nach einem der Ansprüche 23 bis 32, **gekennzeichnet durch** einen zweiten Arm (65), der zum Führen des Polsters (30) aus der Ruheposition in die Betriebsposition über ein erstes freies Ende (66) des zweiten Armes (65) am Polster (30) und über ein dem ersten Ende (66) gegenüberliegendes zweites freies Ende (67) des zweiten Armes (65) an der Rückenlehne (3) gelagert ist.

34. Insassenrückhalteeinrichtung nach Anspruch 7 und einem der Ansprüche 23 bis 33, **dadurch gekennzeichnet, dass** das Polster (30) den Gasgenerator (G) umgibt.

35. Insassenrückhalteeinrichtung nach Anspruch 6 oder einem der Ansprüche 7 oder 8 soweit rückbezogen auf Anspruch 6 und nach Anspruch 28 oder einem der Ansprüche 29 bis 34 soweit rückbezogen auf Anspruch 28, **dadurch gekennzeichnet, dass** das Gassackpaket (M) an der Lehnenwangenstütze (70) festgelegt ist.

36. Insassenrückhalteeinrichtung nach einem der vorangegangenen Ansprüchen, **dadurch gekennzeichnet, dass** der Gassack (6) im aufgeblasenen Zustand entlang der Ausdehnungsrichtung (R) über die Lehnenwange (4) hinausragt und insbesondere derart um die Lehnenwange (4) herumgelegt ist, dass ein den Kraftfahrzeugsitz (2) bestimmungsgemäß belegender Insasse (P) entlang der Ausdehnungsrichtung (R) zumindest teilweise zwischen dem Gassack (6) und der Rückenlehne (3) angeordnet ist.

37. Insassenrückhalteeinrichtung nach einem der vorangegangen Ansprüche, **dadurch gekennzeichnet, dass** der Gassack (6) eine erste Kammer (6a) und eine die erste Kammer (6a) umgebende zweite Kammer (6b) aufweist, wobei die erste Kammer (6a) zumindest eine Durchströmöffnung aufweist, durch die hindurch in die erste Kammer (6a) eingeleitetes Gas in die zweite Kammer (6b) strömen kann, und wobei der Gassack (6) dazu ausgebildet ist, über die erste Kammer (6a) mit Gas befüllt zu werden.

38. Insassenrückhalteeinrichtung nach einem der vorangegangenen Ansprüche, **dadurch gekennzeichnet, dass** der Kraftfahrzeugsitz (2), insbesondere die Rückenlehne (3) und / oder die Lehnenwange (4), dazu eingerichtet und vorgesehen ist, zur Aufrechterhaltung eines Entfaltungsraumes für den Gassack (6) durch die Gegenkraft (F) quer zur Ausdehnungsrichtung (R) deformiert zu werden.

39. Insassenrückhalteeinrichtung nach einem der vorangegangenen Ansprüche, **dadurch gekennzeichnet, dass** der Kraftfahrzeugsitz (2) dazu eingerichtet und vorgesehen ist, quer zur Ausdehnungsrichtung (R) linear verschieblich in einem Kraftfahrzeug gelagert zu werden, so dass der Kraftfahrzeugsitz (2) aus einer ersten Position von der Tragstruktur (5) weg in eine zweite Position verschiebbar ist, wenn die Pre-Crash-Detektionsvorrichtung (7) eine bevorstehende Krafteinwirkung auf die Außenseite (5a) der Tragstruktur (5) erkennt.

40. Insassenrückhalteeinrichtung nach einem der vorangegangenen Ansprüche, **dadurch gekennzeichnet, dass** der Kraftfahrzeugsitz (2) - bezogen auf einen in ein Kraftfahrzeug eingebauten Zustand - dazu eingerichtet und vorgesehen ist, um eine parallel zur Fahrzeuglängsachse (x) verlaufende Fahrzeugachse rotierbar in einem Kraftfahrzeug gelagert zu werden, so dass der Kraftfahrzeugsitz (2) aus einer ersten Position von der Tragstruktur (5) weg in eine zweite Position rotierbar ist, wenn die Pre-Crash-Detektionsvorrichtung (7) eine bevorstehende Krafteinwirkung auf die Außenseite (5a) der Tragstruktur (5) erkennt.

41. Insassenrückhalteeinrichtung nach Anspruch 39 oder 40, **gekennzeichnet durch** eine mit der Pre-Crash-Detektionsvorrichtung (7) zusammenwirkende Bewegungserzeugungsvorrichtung (B'''), die dazu eingerichtet und vorgesehen ist, den Kraftfahrzeugsitz (2) aus der ersten Position in die zweite Position zu bewegen, wenn die Pre-Crash-Detektionsvorrichtung (7) eine bevorstehende Krafteinwirkung auf die Außenseite (5a) der Tragstruktur (5) erkennt.

42. Insassenrückhalteeinrichtung nach Anspruch 7 oder einem der Ansprüche 8 bis 41, **gekennzeichnet durch** einen mit dem Gasgenerator (G) zusammenwirkenden Crashsensor (7), der beim Erfassen einer auf die Außenseite (5a) der Tragstruktur (5) erfolgenden Krafteinwirkung den Gasgenerator (G) zum Aufblasen des Gassackes (6) aktiviert.

43. Insassenrückhalteeinrichtung nach einem der vorangegangenen Ansprüche, **dadurch gekennzeichnet, dass** der Gassack (6) dazu ausgebildet ist, im aufgeblasenen Zustand zumindest teilweise an dem den Kraftfahrzeugsitz (2) bestimmungsgemäß belegenden Insassen (P) anzuliegen, um eine von der Innenseite (5b) der Tragstruktur (5) her auf den Insassen (P) gerichtete Gegenkraft (F) auf den Insassen (P) auszuüben.

## Claims

1. An occupant restraint device for a motor vehicle, with
- a backrest side cheek (4), which protrudes from a backrest (3) of a motor vehicle seat (2), for laterally supporting an occupant (P) correctly occupying the motor vehicle seat (2), the backrest side cheek having an outer side (4a) which faces away from the occupant (P),
- a supporting structure (5) of a motor vehicle, which, with reference to a state in which it is fitted in the motor vehicle, has an outer side (5a) which faces an exterior space (A) of the motor vehicle, and an inner side (5b) which faces away from the exterior space (A) of the motor vehicle and faces the outer side (4a) of the backrest side cheek (4), and
- an airbag (6) which is arranged in the motor vehicle seat (2) and can be inflated in order to protect the occupant (P) in the face of an application of force taking place on the outer side (5a) of the supporting structure (5) from the exterior space (A), wherein, in the inflated state, the airbag (6) is supported on the inner side (5b) of the supporting structure (5) and exerts an opposing force (F) on the outer side (4a) of the backrest side cheek (4), which force is directed onto the outer side (4a) of the backrest side cheek (4) from the inner side (5b) of the supporting structure (5),
**characterized by**
a pre-crash detection device (7) for identifying an imminent application of force taking place on the outer side (5a) of the supporting structure (5) from the exterior space (A), said pre-crash detection device, upon identifying an imminent application of force, activating an expansion of the backrest side cheek (4) in an expansion direction (R) running along the supporting structure (5).

2. The occupant restraint device as claimed in claim 1, **characterized in that,** by means of the expansion of the backrest side cheek (4), an inner side (4b) of the backrest side cheek (4), which side faces the occupant (P) and faces away from the inner side (5b) of the supporting structure (5), forms a bearing surface for the occupant (P), via which the opposing force (F) exerted by the airbag (6) can be introduced into the occupant (P).

3. The occupant restraint device as claimed in claim 1 or 2, **characterized in that** the backrest side cheek (4) surrounds a backrest side cheek body (K) which can be moved along the expansion direction (R) to and fro between an inoperative position and an operative position.

4. The occupant restraint device as claimed in claim 3, **characterized in that** the expansion of the backrest side cheek (4) along the expansion direction (R) is brought about by a movement of the backrest side cheek body (K) from the inoperative position into the operative position.

5. The occupant restraint device as claimed in one of the preceding claims, **characterized in that** the airbag (6) is arranged on the outer side (4a) of the backrest side cheek (4).

6. The occupant restraint device as claimed in one of the preceding claims, **characterized by** a module support (T) for supporting an airbag package (M) at least comprising the airbag (6).

7. The occupant restraint device as claimed in one of the preceding claims, **characterized by** a gas generator (G) for inflating the airbag (6).

8. The occupant restraint device as claimed in claims 6 and 7, **characterized in that** the airbag package (M) comprises the gas generator (G).

9. The occupant restraint device as claimed in either of claims 3 and 4 and as claimed in claim 6 or either of claims 7 and 8, insofar as they refer back to claim 6, **characterized in that** the backrest side cheek body (K) comprises the module support (T) together with the airbag package (M).

10. The occupant restraint device as claimed in one of the preceding claims, **characterized in that** the backrest (3) has a backrest frame (L) as a basic body of the backrest (3).

11. The occupant restraint device as claimed in claim 10 and as claimed in claim 3 or one of claims 4 to 9, insofar as they refer back to claim 3, **characterized in that** the backrest side cheek body (K) is mounted movably on the backrest frame (L) for moving from the inoperative position into the operative position.

12. The occupant restraint device as claimed in claim 11, **characterized in that** the backrest side cheek body (K) is mounted movably on the backrest frame (L) via a first and a second lever (H, H'), the two levers (H, H') each being mounted pivotably on the backrest side cheek body (K) via one of their ends (E), and the two levers (H, H') being mounted pivotably on the backrest frame (L) via the respective other end (E').

13. The occupant restraint device as claimed in claim 12, **characterized in that** the two levers (H, H') are fixed to each other in a manner such that they can pivot in relation to each other via a respective central section (10) which connects the two ends (E, E') to each other.

14. The occupant restraint device as claimed in claim 12, **characterized in that** the two levers (H, H') are each mounted on the backrest frame (L) in a manner such that they can pivot about an axis (15) running along the backrest side cheek (4).

15. The occupant restraint device as claimed in one of claims 12 to 14, **characterized by** a movement generating device (B) which interacts with the pre-crash detection device (7) and is designed in order, when an imminent application of force to the outer side (5a) of the supporting structure (5) is identified, to pivot at least one of the two levers (H, H'), in particular both levers (H, H'), in order to shift the backrest side cheek body (K) from the inoperative position into the operative position.

16. The occupant restraint device as claimed in claim 11 or one of claims 12 to 15, insofar as they refer back to claim 11, **characterized in that** a guide means is provided for movably mounting the backrest side cheek body (K) on the backrest frame (L).

17. The occupant restraint device as claimed in claim 16, **characterized in that** the guide means has at least one recess which is formed on the backrest frame (L) and in which a pin formed on the backrest side cheek body (K) engages such that the backrest side cheek body (K) can slide along the backrest frame (L) along the expansion direction (R).

18. The occupant restraint device as claimed in claim 6 or one of claims 7 to 17, insofar as they refer back to claim 6, **characterized in that** the module support (T) is of planar design, and **in that** the module support (T) has a border region (T') which extends along the backrest side cheek (4) and has a concave curvature which extends along the backrest side cheek (4) and forms a receptacle for the airbag package (M).

19. The occupant restraint device as claimed in claim 6 or one of claims 7 to 17, insofar as they refer back to claim 6, **characterized in that** the module support is designed as a housing (T'') which surrounds the airbag package (M) and is configured and provided in order to be moved from a first position into a second position along a direction of movement (R') directed from the outer side (4a) of the backrest side cheek (4) to the inner side (5b) of the supporting structure (5), if the pre-crash detection device (7) identifies an imminent application of force to the outer side (5a) of the supporting structure (5).

20. The occupant restraint device as claimed in claim 19, **characterized in that** the module support (T'') has at least one openable region (20) through which the airbag (6) can be deployed into an interior (I) of the motor vehicle.

21. The occupant restraint device as claimed in claim 20, **characterized in that,** when the module support (T'') is shifted from the first position into the second position, the openable region (20) is positioned between the inner side (5b) of the supporting structure (5) and the outer side (4a) of the backrest side cheek (4) such that the airbag (6) can be deployed along the expansion direction (R) between the inner side (5b) of the supporting structure (5) and the outer side (4a) of the backrest side cheek (4).

22. The occupant restraint device as claimed in one of claims 19 to 21, **characterized by** a movement generating device (B'') which interacts with the pre-crash detection device (7) and is configured and provided in order to move the module support (T'') from the first position into the second position when the pre-crash detection device (7) identifies an imminent application of force to the outer side (5a) of the supporting structure (5).

23. The occupant restraint device as claimed in claim 3 or one of claims 4 to 11, insofar as they refer back to claim 3, **characterized in that** the backrest side cheek body (K) comprises an energy-absorbing cushion (30).

24. The occupant restraint device as claimed in claim 23, **characterized in that,** in the operative position of the backrest side cheek body (K), the cushion (30) is arranged transversely with respect to the expansion direction (R) between the inner side (5b) of the supporting structure (5) and the pelvis of a vehicle occupant (P) correctly occupying the motor vehicle seat (2).

25. The occupant restraint device as claimed in claim 23 or 24, **characterized in that** the cushion (30) is mounted on the motor vehicle seat (2) in a manner such that it can pivot from the inoperative position into the operative position at least via a first arm (50) extending longitudinally along a direction of extent (40).

26. The occupant restraint device as claimed in claim 25, **characterized in that** the first arm (50) is fixed via a connecting region (51) to an outer side (35) of the cushion (30), which outer side faces the supporting structure (5).

27. The occupant restraint device as claimed in claim 26, **characterized in that** the connecting region (51) is connected via a central section (52) of the first arm (50) to a bearing region (53) of the first arm (50), via which the first arm (50) is mounted on a seat part (60) of the motor vehicle seat (2) in a manner such that it can pivot about an axis of rotation (D).

28. The occupant restraint device as claimed in claims 26 or 27, **characterized in that** a free first end section (54) of the first arm (50) protrudes along the direction of extent (40) from the connecting region (51), said end section being connected to the backrest (3) via a flexible, longitudinally extending backrest side cheek support (70) which forms a means of stiffening the backrest side cheek (4), the backrest side cheek support (70) being shifted transversely with respect to its longitudinal extent along the expansion direction (R) when the cushion (30) is moved from the inoperative position into the operative position.

29. The occupant restraint device as claimed in claim 27 or as claimed in claim 28, insofar as it refers back to claim 27, **characterized in that** a free second end section (55) of the first arm (50) protrudes along the direction of extent (40) from the bearing region (53).

30. The occupant restraint device as claimed in claim 29, **characterized in that** the free second end section (55) has a toothing (V) which can mesh with a coupling element in the form of a drive wheel (80) in order to pivot the first arm (50) about the axis of rotation (D) in such a manner that the cushion (30) is moved from the inoperative position into the operative position.

31. The occupant restraint device as claimed in claim 29, **characterized in that** the free second end section (55) for pivoting the first arm (50) about the axis of rotation (D) in such a manner that the cushion (30) is moved from the inoperative position into the operative position is designed in order to be connected to a movement generating device via a longitudinally extending coupling element.

32. The occupant restraint device as claimed in either of claims 30 and 31, **characterized by** a movement generating device (B') which interacts with the pre-crash detection device (7) and is configured and provided in order to drive the coupling element (80) for moving the cushion (30) from the inoperative position into the operative position when the pre-crash detection device (7) identifies an imminent application of force to the outer side (5a) of the supporting structure (5).

33. The occupant restraint device as claimed in one of claims 23 to 32, **characterized by** a second arm (65) which, in order to guide the cushion (30) from the inoperative position into the operative position, is mounted on the cushion (30) via a first free end (66) of the second arm (65) and is mounted on the backrest (3) via a second free end (67) of the second arm (65), which end lies opposite the first end (66).

34. The occupant restraint device as claimed in claim 7 and one of claims 23 to 33, **characterized in that** the cushion (30) surrounds the gas generator (G).

35. The occupant restraint device as claimed in claim 6 or either of claims 7 and 8, insofar as they refer back to claim 6, and as claimed in claim 28 or one of claims 29 to 34, insofar as they refer back to claim 28, **characterized in that** the airbag package (M) is fixed to the backrest side cheek support (70).

36. The occupant restraint device as claimed in one of the preceding claims, **characterized in that,** in the inflated state, the airbag (6) projects along the expansion direction (R) beyond the backrest side cheek (4) and, in particular, is laid around the backrest side cheek (4) in such a manner that an occupant (P) correctly occupying the motor vehicle seat (2) is at least partially arranged along the expansion direction (R) between the airbag (6) and the backrest (3).

37. The occupant restraint device as claimed in one of the preceding claims, **characterized in that** the airbag (6) has a first chamber (6a) and a second chamber (6b) surrounding the first chamber (6a), the first chamber (6a) having at least one throughflow opening through which gas introduced into the first chamber (6a) can flow into the second chamber (6b), and the airbag (6) being designed in order to be filled with gas via the first chamber (6a).

38. The occupant restraint device as claimed in one of the preceding claims, **characterized in that** the motor vehicle seat (2), in particular the backrest (3) and/or the backrest side cheek (4), is configured and provided in order to be deformed transversely with respect to the expansion direction (R) by the opposing force (F) so as to maintain a deployment space for the airbag (6).

39. The occupant restraint device as claimed in one of the preceding claims, **characterized in that** the motor vehicle seat (2) is configured and provided in order to be mounted in a motor vehicle in a linearly displaceable manner transversely with respect to the expansion direction (R) such that the motor vehicle seat (2) can be displaced from a first position away from the supporting structure (5) into a second position when the pre-crash detection device (7) identifies an imminent application of force to the outer side (5a) of the supporting structure (5).

40. The occupant restraint device as claimed in one of the preceding claims, **characterized in that** the motor vehicle seat (2) - with reference to a state in which it is fitted in a motor vehicle - is configured and provided in order to be mounted in a motor vehicle in a manner such that it can rotate about a vehicle axis running parallel to the longitudinal axis (x) of the vehicle, such that the motor vehicle seat (2) can be rotated from a first position away from the supporting structure (5) into a second position when the pre-crash detection device (7) identifies an imminent application of force to the outer side (5a) of the supporting structure (5).

41. The occupant restraint device as claimed in claim 39 or 40, **characterized by** a movement generating device (B''') which interacts with the pre-crash detection device (7) and is configured and provided in order to move the motor vehicle seat (2) from the first position into the second position when the pre-crash detection device (7) identifies an imminent application of force to the outer side (5a) of the supporting structure (5).

42. The occupant restraint device as claimed in claim 7 or one of claims 8 to 41, **characterized by** a crash sensor (7) which interacts with the gas generator (G) and, when an application of force taking place on the outer side (5a) of the supporting structure (5) is detected, activates the gas generator (G) in order to inflate the airbag (6).

43. The occupant restraint device as claimed in one of the preceding claims, **characterized in that** the airbag (6) is designed in order, in the inflated state, to bear at least partially against the occupant (P) correctly occupying the motor vehicle seat (2), in order to exert an opposing force (F) on the occupant (P), which opposing force is directed at the occupant (P) from the inner side (5b) of the supporting structure (5).

## Revendications

1. Système de retenue de passager pour un véhicule automobile, comprenant :
- une aile de dossier (4) qui dépasse depuis un dossier (3) d'un siège (2) du véhicule pour soutenir latéralement un passager (P) qui occupe le siège (2) du véhicule conformément à sa destination, ladite aile présentant un côté extérieur (4a) détourné du passager (P),
- une structure portante (5) d'un véhicule qui, par référence à un état monté dans le véhicule, présente une face extérieure (5a) tournée vers un espace extérieur (A) du véhicule et une face intérieure (5b) détournée de l'espace intérieur (A) du véhicule, cette dernière étant tournée vers le côté extérieur (4a) de l'aile de dossier (4), et
- un sac à gaz (6) agencé dans le siège (2) du véhicule, susceptible d'être gonflé pour la protection du passager (P) sous l'action d'une force agissant depuis l'espace extérieur (A) sur la face extérieure (5a) de la structure portante (5), ledit sac à gaz (6) étant soutenu, dans l'état gonflé, contre la face intérieure (5b) de la structure portante (5) et exerçant sur le côté extérieur (4a) de l'aile de dossier (4) une force antagoniste (F) dirigée depuis la face intérieure (5b) de la structure portante (5) vers le côté extérieur (4a) de l'aile de dossier (4),
**caractérisé par** un dispositif de détection (7) de collision imminente pour reconnaître l'action d'une force imminente exercée depuis l'espace extérieur (A) sur la face extérieure (5a) de la structure portante (5) et qui, lors de la reconnaissance de l'action d'une force imminente, active un allongement de l'aile de dossier (4) dans une direction d'allongement (R) qui s'étend le long de la structure portante (5).

2. Système de retenue de passager selon la revendication 1, **caractérisé en ce qu'**un côté intérieur (4b) de l'aile de dossier (4) tourné vers le passager (P) et détourné de la face intérieure (5b) de la structure portante (5) forme, en raison de l'allongement de l'aile de dossier (4), une surface d'appui pour le passager, via laquelle la force antagoniste (F) exercée par le sac à gaz (6) peut être appliquée au passager (P).

3. Système de retenue de passager selon la revendication 1 ou 2,
**caractérisé en ce que** l'aile de dossier (4) entoure un corps de l'aile de dossier (K) déplaçable le long de la direction allongement (R) en va-et-vient entre une position de repos et une position de service.

4. Système de retenue de passager selon la revendication 3, **caractérisé en ce que** l'allongement de l'aile de dossier (4) le long de la direction d'allongement (R) est provoqué par un déplacement du corps de l'aile de dossier (K) hors de la position de repos jusque dans la position de service.

5. Système de retenue de passager selon l'une des revendications précédentes, **caractérisé en ce que** le sac à gaz (6) est agencé contre le côté extérieur (4a) de l'aile de dossier (4).

6. Système de retenue de passager selon l'une des revendications précédentes, **caractérisé par** un support modulaire (T), pour porter un paquet de sac à gaz (M) qui englobe au moins le sac à gaz (6).

7. Système de retenue de passager selon l'une des revendications précédentes, **caractérisé par** un générateur de gaz (G) pour le gonflage du sac à gaz (6).

8. Système de retenue de passager selon les revendications 6 et 7,
**caractérisé en ce que** le paquet de sac à gaz (M) inclut le générateur de gaz (G).

9. Système de retenue de passager selon l'une des revendications 3 ou 4 et selon la revendication 6 ou l'une des revendications 7 ou 8 prise en dépendance de la revendication 6, **caractérisé en ce que** le corps (K) de l'aile de dossier comprend le support modulaire (T) ensemble avec le paquet de sac à gaz (M).

10. Système de retenue de passager selon l'une des revendications précédentes, **caractérisé en ce que** le dossier (3) comprend, à titre de corps de base du dossier (3), un cadre de dossier (L).

11. Système de retenue de passager selon la revendication 10 et selon la revendication 3 ou l'une des revendications 4 à 9 prise en dépendance de la revendication 3, **caractérisé en ce que** le corps (K) de l'aile de dossier est monté mobile sur le cadre de dossier (L) pour se déplacer depuis la position de repos jusque dans la position de service.

12. Système de retenue de passager selon la revendication 11, **caractérisé en ce que** le corps (K) de l'aile de dossier est monté mobile sur le cadre de dossier (L) via un premier et un second levier (H, H'), les deux leviers (H, H') étant montés chacun en pivotement sur le corps (K) de l'aile de dossier via l'une de ses extrémités (E), et les deux leviers (H, H') étant montés en pivotement sur le cadre de dossier (L) via l'autre extrémité respective (E').

13. Système de retenue de passager selon la revendication 12, **caractérisé en ce que** les deux leviers (H, H') sont fixés l'un à l'autre avec possibilité de pivotement l'un par rapport à l'autre respectivement via un tronçon médian (10) qui relie les deux extrémités (E, E') l'une à l'autre.

14. Système de retenue de passager selon la revendication 12, **caractérisé en ce que** les deux leviers (H, H') sont montés respectivement sur le cadre de dossier (L) en pivotement autour d'un axe (15) qui s'étend le long de l'aile de dossier (4).

15. Système de retenue de passager selon l'une des revendications 12 à 14, **caractérisé par** un dispositif de production de mouvement (B), qui coopère avec le dispositif de détection de collision imminente (7) et qui est réalisé dans le but, lors de la reconnaissance de l'action imminente d'une force sur la face extérieure (5a) de la structure portante (5), de faire pivoter l'un au moins des deux leviers (H, H'), en particulier les deux leviers (H, H') afin de déplacer le corps (K) de l'aile de dossier hors de la position de repos jusque dans la position de service.

16. Système de retenue de passager selon la revendication 11, ou selon l'une des revendications 12 à 15 prise en dépendance de la revendication 11, **caractérisé en ce qu'**il est prévu à un moyen de guidage sur le cadre de dossier (L) pour le montage mobile du corps (K) de l'aile de dossier.

17. Système de retenue de passager selon la revendication 16, **caractérisé en ce que** le moyen de guidage comprend au moins un évidement ménagé sur le cadre de dossier (L), dans lequel s'engage une tige réalisée sur le corps (K) de l'aile de dossier, de sorte que le corps (K) de l'aile de dossier peut coulisser sur le cadre de dossier (L) le long de la direction d'allongement (R).

18. Système de retenue de passager selon la revendication 6 ou selon l'une des revendications 7 à 17 prise en dépendance de la revendication 6, **caractérisé en ce que** le support modulaire (T) est réalisé sous forme plane, et **en ce que** le support modulaire (T) présente une zone de bordure (T'), qui s'étend le long de l'aile de dossier (4) et qui présente une courbure concave s'étendant le long de l'aile de dossier (4), ladite courbure formant un logement pour le paquet de sac à gaz (M).

19. Système de retenue de passager selon la revendication 6 ou selon l'une des revendications 7 à 17 prise en dépendance de la revendication 6, **caractérisé en ce que** le support modulaire est réalisé sous la forme d'un boîtier (T") qui entoure le paquet de sac à gaz (M), ledit boîtier étant agencé et prévu pour être déplacé hors d'une première position jusque dans une deuxième position le long d'une direction de déplacement (R') orientée depuis le côté extérieur (4a) de l'aile de dossier (4) vers la face intérieure (5b) de la structure portante (5) quand le dispositif de détection de collision imminente (7) reconnaît l'imminence de l'action d'une force sur la face extérieure (5a) de la structure portante (5).

20. Système de retenue de passager selon la revendication 19, **caractérisé en ce que** le support modulaire (T") comprend au moins une zone (20) capable d'être ouverte, à travers laquelle le sac à gaz (6) peut être déployé dans un habitacle (1) du véhicule automobile.

21. Système de retenue de passager selon la revendication 20, **caractérisé en ce que** la zone (20) capable d'être ouverte est positionnée, lors du déplacement du support modulaire (T") hors de la première position jusque dans la deuxième position, entre la face intérieure (5b) de la structure portante (5) et le côté extérieur (4a) de l'aile de dossier (4) de telle manière que le sac à gaz (6) peut se déployer le long de la direction d'allongement (R) entre la face intérieure (5b) de la structure portante (5) et le côté extérieur (4a) de l'aile de dossier (4).

22. Système de retenue de passager selon l'une des revendications 19 à 21, **caractérisé par** un dispositif de génération de mouvement (B") coopérant avec le dispositif de détection de collision imminente (7), agencé et prévu pour déplacer le support modulaire (T") hors de la première position jusque dans la deuxième position quand le dispositif de détection de collision imminente (7) reconnaît l'imminence de l'action d'une force sur la face extérieure (5a) de la structure portante (5).

23. Système de retenue de passager selon la revendication 3 ou selon l'une des revendications 4 à 11 prise en dépendance de la revendication 3, **caractérisé en ce que** le corps (K) de l'aile de dossier comprend un rembourrage (30) absorbant l'énergie.

24. Système de retenue de passager selon la revendication 23, **caractérisé en ce que** le rembourrage (30) est agencé, dans la position de service du corps (K) de l'aile de dossier, transversalement à la direction d'allongement (R) entre la face intérieure (5b) de la structure portante (5) et le bassin d'un passager (P) du véhicule qui occupe le siège (2) du véhicule conformément à sa destination.

25. Système de retenue de passager selon la revendication 23 ou 24, **caractérisé en ce que** le rembourrage (30) est monté sur le siège de véhicule (2) au moins via un premier bras (50) qui s'étend le long d'une direction d'extension (40) de manière à pouvoir pivoter hors de la position de repos jusque dans la position de service.

26. Système de retenue de passager selon la revendication 25, **caractérisé en ce que** le premier bras (50) est fixé via une zone de liaison (51) à une face extérieure (35) du rembourrage (30) qui est tournée vers la structure portante (5).

27. Système de retenue de passager selon la revendication 26, **caractérisé en ce que** la zone de liaison (51) est reliée, via un tronçon médian (52) du premier bras (50), à une zone de montage (53) du premier bras (50) via laquelle le premier bras (50) est monté sur une partie de siège (60) du siège de véhicule (2) en pivotement autour d'un axe de rotation (D).

28. Système de retenue de passager selon les revendications 26 ou 27, **caractérisé en ce qu'**un premier tronçon terminal libre (54) du premier bras (50) dépasse depuis la zone de liaison (51) le long de la direction d'extension (40), ce tronçon étant relié au dossier (3) via un soutien d'aile (70) flexible, s'étendant longitudinalement, qui forme une rigidification pour l'aile de dossier (4), le soutien d'aile (70) étant déplacé perpendiculairement à sa direction longitudinale le long de la direction d'allongement (R) quand le rembourrage (30) est déplacé depuis la position de repos jusque dans la position de service.

29. Système de retenue de passager selon la revendication 27 ou selon la revendication 28 prise en dépendance de la revendication 27, **caractérisé en ce qu'**un deuxième tronçon terminal libre (55) du premier bras (50) dépasse de la zone de montage (53) le long de la direction d'extension (40).

30. Système de retenue de passager selon la revendication 29,
**caractérisé en ce que** le deuxième tronçon terminal libre (55) comporte une denture (V) qui est capable d'engrener avec un élément d'accouplement sous la forme d'une roue d'entraînement (80) pour faire pivoter le premier bras (50) autour de l'axe de rotation (D) de telle façon que le rembourrage (30) est déplacé hors de la position de repos jusque dans la position de service.

31. Système de retenue de passager selon la revendication 29, **caractérisé en ce que** le deuxième tronçon terminal libre (55) destiné à faire pivoter le premier bras (50) autour de l'axe de rotation (D) de telle façon que le rembourrage (30) est déplacé hors de la position de repos jusque dans la position de service, est réalisé dans le but d'être relié via un élément d'accouplement allongé à un dispositif de génération de mouvement.

32. Système de retenue de passager selon l'une des revendications 30 ou 31, **caractérisé par** un dispositif de génération de mouvement (B') coopérant avec le dispositif de détection de collision imminente (7), réalisé et prévu pour entraîner l'élément d'accouplement (80) pour déplacer le rembourrage (30) hors de la position de repos jusque dans la position de service quand le dispositif de détection de collision imminente (7) reconnaît l'imminence de l'action d'une force sur la face extérieure (5a) de la structure portante (5).

33. Système de retenue de passager selon l'une des revendications 23 à 32, **caractérisé par** un deuxième bras (65) qui, pour amener le rembourrage (30) hors de la position de repos jusque dans la position de service, est monté sur le rembourrage (30) via une première extrémité libre (66) du deuxième bras (65) et qui est monté sur le dossier (3) via une deuxième extrémité libre (67), opposée à la première extrémité (66), du deuxième bras (65).

34. Système de retenue de passager selon la revendication 7 et l'une des revendications 23 à 33, **caractérisé en ce que** le rembourrage (30) entoure le générateur de gaz (G).

35. Système de retenue de passager selon la revendication 6 ou selon l'une des revendications 7 ou 8 prise en dépendance de la revendication 6, et selon la revendication 28 ou l'une des revendications 29 à 34 prise en dépendance de la revendication 28, **caractérisé en ce que** le paquet de sac à gaz (M) est fixé sur le support d'aile (70).

36. Système de retenue de passager selon l'une des revendications précédentes, **caractérisé en ce que,** à l'état gonflé, le sac à gaz (6) dépasse le long de la direction d'allongement (R) au-delà de l'aile de dossier (4), et est disposé autour de l'aile de dossier (4) en particulier de telle manière qu'un passager (P) qui occupe le siège (2) du véhicule conformément à sa destination est agencé le long de la direction d'allongement (R) au moins partiellement entre le sac à gaz (6) et le dossier (3).

37. Système de retenue de passager selon l'une des revendications précédentes, **caractérisé en ce que** le sac à gaz (6) comprend une première chambre (6a) et une deuxième chambre (6b) qui entoure la première chambre (6a), la première chambre (6a) comportant au moins une ouverture traversante à travers laquelle le gaz introduit dans la première chambre (6a) peut s'écouler jusque dans la deuxième chambre (6b), et le sac à gaz (6) est réalisé de manière à être rempli de gaz via la première chambre (6a).

38. Système de retenue de passager selon l'une des revendications précédentes, **caractérisé en ce que** le siège de véhicule (2), en particulier son dossier (3) et/ou son aile de dossier (4), est agencé et prévu pour être déformé perpendiculairement à la direction d'allongement (R) par la force antagoniste (F), pour maintenir un espace de déploiement pour le sac à gaz (6).

39. Système de retenue de passager selon l'une des revendications précédentes, **caractérisé en ce que** le siège de véhicule (2) est agencé et prévu pour être monté dans un véhicule avec possibilité de déplacement linéaire perpendiculairement à la direction d'allongement (R) de telle manière que le siège de véhicule (2) est déplaçable depuis une première position éloignée de la structure portante (5) jusque dans une deuxième position, quand le dispositif de détection de collision imminente (7) reconnaît l'imminence de l'action d'une force sur la face extérieure (5a) de la structure portante (5).

40. Système de retenue de passager selon l'une des revendications précédentes, **caractérisé en ce que** le siège de véhicule (2), par référence à une situation montée dans le véhicule, est agencé et prévu pour être monté dans un véhicule en rotation autour d'un axe s'étendant parallèlement à l'axe longitudinal (x) du véhicule, de telle sorte que le siège de véhicule (2) peut être tourné hors d'une première position en éloignement de la structure portante (5) jusque dans une deuxième position quand le dispositif de détection de collision imminente (7) reconnaît l'imminence de l'action d'une force sur la face extérieure (5a) de la structure portante.

41. Système de retenue de passager selon la revendication 39 ou 40, **caractérisé par** un dispositif de génération de mouvement (B''') coopérant avec le dispositif de détection de collision imminente (7), agencé et prévu pour déplacer le siège de véhicule (2) hors de la première position jusque dans la deuxième position quand le dispositif de détection de collision imminente (7) reconnaît l'imminence de l'action d'une force sur la face extérieure (5a) de la structure portante (5).

42. Système de retenue de passager selon la revendication 7 ou selon l'une des revendications 8 à 41, **caractérisé par** un détecteur de collision (7) qui coopère avec le générateur à gaz (G) et qui, lors de la détection d'une force agissant sur la face extérieure (5a) de la structure portante (5), active le générateur de gaz (G) pour gonfler le sac à gaz (6).

43. Système de retenue de passager selon l'une des revendications précédentes, **caractérisé en ce que** le sac à gaz (6) est réalisé pour, dans l'état gonflé, s'appliquer au moins partiellement contre le passager (P) qui occupe le siège de véhicule (2) conformément à sa destination, afin d'exercer sur le passager (P) une force antagoniste (F) dirigée depuis la face intérieure (5b) de la structure portante (5) vers le passager (P).
